# EUROPÄISCHE PATENTSCHRIFT

(11) **EP 3 365 935 B1**
(45) Veröffentlichungstag und Bekanntmachung des Hinweises auf die Patenterteilung: **01.09.2021**
(21) Anmeldenummer: 15717432.7
(22) Anmeldetag: 27.03.2015
(51) Int. Cl.: H01M 8/04276, H01M 8/1018

(54) **VORRICHTUNG UND VERFAHREN ZUR LEBENSDAUERVERLÄNGERUNG VON HT-PEM BRENNSTOFFZELLEN**
DEVICE AND METHOD FOR INCREASING THE SERVICE LIFE OF HT-PEM FUEL CELLS
DISPOSITIF ET PROCÉDÉ POUR PROLONGER LA DURÉE DE VIE D'UNE CELLULE À COMBUSTIBLE HT-PEM

(30) Priorität: 27.03.2014 DE 102014104310
(43) Veröffentlichungstag der Anmeldung: 29.08.2018
(73) Patentinhaber: Siqens GmbH, 80687 München (DE)
(72) Erfinder: HARBUSCH, Volker, 81369 München (DE); HENNERSPERGER, Felix, 82140 Olching (DE)
(74) Vertreter: HGF
(86) Internationale Anmeldenummer: PCT/EP2015/056793
(87) Internationale Veröffentlichungsnummer: WO 2015/144912

(56) Entgegenhaltungen:
- EP-A1- 2 339 677
- DE-A1- 19 914 247
- DE-A1-102006 062 251
- JP-A- H02 158 060
- JP-A- S60 121 680
- None

## Beschreibung

Die vorliegende Erfindung betrifft eine Vorrichtung und ein Verfahren zur Lebensdauerverlängerung von Hochtemperatur-Polymerelektrolytmembran-Brennstoffzellen (HT-PEM-BZ).

Mit Beginn des Einsatzes von polymeren Membranen in der Brennstoffzellentechnik als invarianten Feststoffelektrolyten (PEM-Brennstoffzellen) richtet sich die Aufmerksamkeit auf protonenleitende Membranen unter anderem auf Basis basischer Polymere wie beispielsweise Polybenzimidazol.

Bei Letztgenanntem ist das protonenleitende Polymer dabei mit einem Elektrolyten, insbesondere einer starken Säure, wie beispielsweise Schwefelsäure oder Phosphorsäure, dotiert. Diese Dotierung führt zu einem Polymerelektrolyten, der ein Einphasensystem bildet, in dem die Säure durch das Polymer komplexiert ist.

Eine Hochtemperatur-Polymerelektrolytmembran (HT-PEM) - Membranelektrodeneinheit (MEA) bzw. eine Einzelzelle umfasst zwei Elektroden, zwischen denen eine Polymermembran angeordnet ist.

Die Polymermembran ist beispielsweise eine Polybenzimidazol- (PBI) oder Polyether-Membran, die eine Polymer-Trägermatrix aufweist. In die Polymer-Trägermatrix ist flüssige Phosphorsäure als Elektrolyt eingelagert.

Die Elektroden bzw. Gasdiffusionselektroden umfassen ein gasdurchlässiges und elektrisch leitfähiges Gasdiffusionssubstrat, auf das ein Katalysator, zumeist Platin, aufgebracht ist. Der Katalysator verwendet als Träger zumeist Kohlenstoffpartikel, wie z.B. Ruß, oder einen anorganischen Stoff mit elektrischer Leitfähigkeit, wie z.B. Karbide. Eine derartige Elektrodenschicht weist meist auch Zusätze, wie z.B. Polytetrafluorethylen (PTFE) oder PBI zur Stabilisierung und zum Erreichen einer guten ionischen Leitfähigkeit auf. Zudem erlaubt dieser Aufbau eine gute Versorgung mit Reaktanden.

Zwischen dem Gasdiffusionssubstrat und der Elektrodenschicht kann sich eine weitere Schicht aus Ruß und ggfs. Zusätzen wie zum Beispiel PTFE befinden (microporous layer). Diese wird als Trägerschicht für die Katalysatorschicht genutzt. Bei geeigneter Ausführung, zum Beispiel eine hohe Hydrophobizität durch einen hohen PTFE-Anteil, vermindert diese den Eintritt von flüssigem Elektrolyt aus der Elektrodenschicht in das Gasdiffusionssubstrat während des Brennstoffzellenbetriebs.

Als Elektroden einer Brennstoffzelle sind eine Anodengasdiffusionselektrode (Anoden-GDE) und eine Kathodengasdiffusionselektrode (Kathoden-GDE) vorgesehen.

Eine Elektrode umfasst das Gasdiffusionssubstrat, die Katalysatorschicht und ggfs. auch eine Zwischenschicht, die sich unter der Katalysatorschicht befindet.

Sowohl in der Anoden-GDE als auch in der Kathoden-GDE befindet sich Säure, um einen ionischen Kontakt zwischen dem Elektrolytsystem (z.B. PBI-Membran mit absorbierter Phosphorsäure) und dem Katalysator herzustellen.

Zur Versorgung der MEAs sind Versorgungsplatten mit einer Anoden- bzw. einer Kathodenkanalstruktur vorgesehen. Die Versorgungsplatten sind Platten aus einem elektrisch leitfähigen Material, wie zum Beispiel graphithaltigen oder metallischen Werkstoffen, in denen die Kanalstruktur ausgebildet ist. Sind in einer Platte sowohl eine Anoden- als auch eine Kathodenkanalstruktur ausgebildet, wird diese als Bipolar-Platte bezeichnet. Zur Abdichtung der Medien werden Dichtrahmen, beispielsweise aus FKM (Fluorkautschuk), PFA (Perfluoralkoxylalkan) oder PTFE (Polytetrafluorethylen), eingesetzt.

In einem Brennstoffzellenstapel weisen mehrere hintereinander geschaltete Platten ein oder mehrere Kanäle zur Anodenversorgung und einen oder mehrere Kanäle zur Kathodenversorgung auf.

Weiterhin sind im Stand der Technik auch Phosphorsäurebrennstoffzellen (PAFC) bekannt. Bei diesen Brennstoffzellen ist der Katalysator, zumeist Platin, auf Kohlenstoffpartikeln angeordnet, welche in der Regel mit Hilfe von Polytetrafluorethylen (PTFE) zusammengehalten werden. In dieser zusammenhängenden, porösen Elektrodenstruktur ist Phosphorsäure eingelagert. Die Phosphorsäure liegt in flüssigem Zustand vor und ist hoch konzentriert. Als Elektrolytsystem wird eine Matrix verwendet, in der flüssige oder gelförmige Phosphorsäure in Siliziumkarbid eingelagert ist. Bei Betriebstemperaturen von ca. 200°C verdampft die Phosphorsäure allmählich, was dazu führt, dass ein Teil der Phosphorsäure während der Lebensdauer über die Kathodenkanalstruktur ausgedampft wird. Um Phosphorsäure nachzuführen, sind die Kanalstrukturen häufig in Platten aus porösem Graphit ausgebildet, wobei in den, aufgrund der Porosität vorhandenen Zwischenräumen, Phosphorsäure eingelagert ist. Diese Phosphorsäure gelangt aufgrund des Kapillareffekts zu den Elektroden bzw. zum Elektrolytsystem. Ein Kapillareffekt liegt vor, da die Poren der Elektrolytmatrix eine geringere Größe aufweisen als die Poren der Versorgungsplatten. Um zu verhindern, dass die Elektrodenräume undicht sind, sind Teilbereiche der Bipolar-Platten nicht porös ausgebildet oder es werden Plattenaufbauten verwendet, die gasundurchlässige Platten zwischen den porösen Platten enthalten.

In der US 7 763 390 B2 sind Vorrichtungen beschrieben, die die Lebensdauer einer Phosphorsäure-Brennstoffzelle erhöhen sollen. Bei diesen Vorrichtungen ist zwischen einer Katalysatorschicht und einer Kanalstruktur eine hydrophile Schicht ausgebildet, in die Phosphorsäure eingelagert ist.

Aus der JP 10 320 10 und der JP 11 016 589 gehen Phosphorsäurebrennstoffzellen hervor, die Reservoirplatten verwenden. Die Poren der Reservoirplatten weisen einen größeren Durchmesser auf als die Poren der Katalysatorschicht. Hierbei ist vorgesehen, Phosphorsäure in den entsprechenden Reservoirs bzw. Poren der Elektrolyt-Reservoirplatten zu lagern.

Durch diesen Überschuss an Phosphorsäure soll der Verlust von Phosphorsäure durch Verdampfung oder deren Absorption durch Zellkomponenten ausgeglichen werden. Die Reservoir-Platten weisen insbesondere Rinnen auf, in denen ein Füllstoff angeordnet ist, der mit Phosphorsäure getränkt ist.

Der Transport der Phosphorsäure soll über den Kapillareffekt erfolgen. Die Phosphorsäure wird beispielsweise in einem porösen Kohlenstoff von einem porösen Kohlenstoffvlies aufgesaugt und zwischen den Elektroden angeordnet.

In der JP 09 035 727 und der JP 02 204 973 ist vorgesehen, einen externen Phosphorsäuretank zu verwenden und mittels diesem die Phosphorsäure dem Füllstoff bzw. dem Kohlenstoffvlies in den Reservoir-Platten zuzuführen.

In der JP 02 299 165 ist ein System beschrieben, bei dem die Phosphorsäure in einem Phosphorsäuretank erhitzt werden soll, um Phosphorsäuredampf zu erzeugen, welcher dann gasförmig der Brennstoffzelle zugeführt wird.

Bei Phosphorsäurebrennstoffzellen ist es aufgrund der porösen Graphitplatten möglich, die Phosphorsäure schnell und einfach nachzuführen. Nachteilig bei derartigen Systemen ist jedoch die hohe Phosphorsäurekonzentration in den Elektroden, was die Versorgung der Reaktanden, insbesondere die Sauerstoffzuführung an den Katalysator, hemmt. Zudem ruft eine Phosphatadsorption am Katalysator (Platin) eine katalytische Hemmung hervor. Diese Beeinträchtigung der Kinetik äußert sich in niedrigen Brennstoffzellenspannungen und/oder niedrigen Leistungsdichten.

Bei einer Hochtemperatur-Polymerelektrolytmembran-Brennstoffzelle ist die Säure, zumeist Phosphorsäure, besser als in einer Phosphorsäurebrennstoffzelle gebunden, da sie in flüssiger Form in die PBI-Matrix direkt oder indirekt ionisch gebunden eingelagert ist. Zudem ist die Säurekonzentration in den Elektroden geringer. Dadurch ist der Säureverlust während des Betriebs bei Hochtemperatur-Polymerelektrolyt-Brennstoffzellen geringer als bei Phosphorsäurebrennstoffzellen.

Dennoch kommt es auch bei Hochtemperatur-Polymerelektrolytmembran-Brennstoffzellen, insbesondere bei bestimmten Betriebszuständen und Betriebsweisen, zu Säureverlust während des Betriebs. Dies ist darauf zurückzuführen, dass die Säure in der Membranelektrodeneinheit (MEA) beim Betrieb mit einer Betriebstemperatur von 140°C bis 210°C, bei dem die Brennstoffzelle mit Luft und Wasserstoff versorgt wird, über die Laufzeit kontinuierlich aus der MEA ausgetragen wird. Die Austragung erfolgt insbesondere über das Kathoden- aber auch über das Anodenabgas. Beim Austritt löst sich die Säure aus der MEA durch Verdampfen. Dieser Vorgang wird insbesondere bei hohen Betriebstemperaturen und hohen Kathodenversorgungslambdas, insbesondere von einem Luftlambda > 2, begünstigt.

Weiterhin kann die Säure auch Ester mit nicht umgesetztem bzw. nicht reformiertem Brennstoff bilden, wie zum Beispiel Trimethylester, welcher dann als gasförmiger Stoff austritt. Somit verlieren die Membran und die Elektroden über ihre Laufzeit permanent Säure, was zu einer Verringerung der ionischen Leitfähigkeit der MEA führt. Dieser Säureverlust geht soweit, dass die Membran aufgrund fehlender Säure nicht mehr als Brennstoffzellenelektrolyt fungieren kann, da ein zu hoher ionischer Widerstand vorhanden ist. Dies schränkt die Lebensdauer stark ein.

In der DE 199 14 247 A1 ist eine HTM-Brennstoffzelle mit verminderter Elektrolytausspülung, eine HTM-Brennstoffzellenbatterie und ein Verfahren zum Starten einer HTM-Brennstoffzelle und/oder einer HTM-Brennstoffzellbatterie beschrieben. Das grundlegende Prinzip dieser Vorrichtung besteht darin, den aus der Brennstoffzelle ausgespülten Elektrolyt aufzufangen und in die Brennstoffzelle zurückzuführen. Die Vorrichtung weist ein Reservoir auf, in dem der aus der Zelle ausgespülte Elektrolyt, der vorübergehend speicherbar ist. Hierbei ist vorgesehen, dass der Elektrolytträger, wie z.B. eine poröse Matrix, oder eine Membran direkt entweder mit einem Randbereich in das Reservoir hineinragt oder dass in dem Elektrolytträger Kapillaren und/oder Kanäle integriert sind, um ein Zurückführen des Elektrolyten zu ermöglichen. Alternativ kann eine zusätzliche Leitung vorgesehen sein, die das Reservoir mit der Membran direkt derart verbindet, dass der ausgespülte Elektrolyt aufgefangen und automatisch nach Einstellung eines Gleichgewichts wieder in die Zelle zurückleitbar ist. Insbesondere beim Startvorgang des Systems, bei dem der Brennstoffzellenstapel noch nicht seine Betriebstemperatur erreicht hat, soll es somit möglich sein den Auftretenden Verlust an Elektrolyt abzumildern.

Aus der DE 11 2010 002 798 T5 geht ein Verfahren zum Verringern des Verlustes von flüssigem Elektrolyt aus einer Hochtemperatur-Polymerelektrolytmembran-Brennstoffzelle hervor. Hierbei ist vorgesehen, dass ein Brennstoffstrom und/oder ein Luftstrom mit Dampf des flüssigen Elektrolyten angereichert werden, wobei der flüssige Elektrolyt mittels einer elektrochemischen Reaktion nachfüllbar ist. Das Verfahren umfasst weiterhin das Zuführen des Dampfes des flüssigen Elektrolyten zu der eine Polymerelektrolytmembran umfassenden Brennstoffzelle mittels einer oder mehrerer gaspermeabler Anoden und gaspermeabler Kathoden. Auf diese Weise soll ein Verlust von flüssigem Elektrolyten von der Membran der Brennstoffzelle verringert werden, was zu einer verbesserten Haltbarkeit der Brennstoffzelle führt.

In der EP 2 339 677 A1 ist eine Brennstoffzelle beschrieben. Diese Brennstoffzelle umfasst eine Membranelektrodeneinheit (MEA, membrane electrode assembly), die in zwei gasabscheidende Schichten eingebettet ist. Zumindest eine der gasabscheidenden Schichten umfasst eine Lage, die derart ausgebildet ist, dass ein Eindringen eines Fluids verhindert wird. Weiterhin sind in den gasabscheidenden Schichten poröse Schichten vorgesehen, die ein Eindringen eines Fluids erlauben, wobei diese Schichten mit einer wasserlöslichen Flüssigkeit imprägniert sind, die einen höheren Siedepunkt als Wasser aufweist. Dieser Aufbau ist vorgesehen, um ein Verdampfen von Wasser aus der MEA auch bei hohen Temperaturen während eines Betriebs der Brennstoffzelle zu verhindern. Die porösen Schichten grenzen an Kanäle, um die porösen Schichten mit einer Flüssigkeit zu Beaufschlagen. Diese Kanäle sind über einem weiteren Flüssigkeitskanal mit einem Flüssigkeitsvorratsbehälter verbunden. In diesem Flüssigkeitsvorratsbehälter kann verdünnte Schwefelsäure bevorratet sein. Zur Unterstützung des Flüssigkeitsstroms kann in dem Leitungsabschnitt eine Pumpe angeordnet sein. Hierbei ist vorgesehen, die porösen Schichten mit verdünnter Schwefelsäure zu beaufschlagen, um das Verdampfen von Wasser während eines Hochtemperaturbetriebs der Brennstoffzelle zu unterdrücken. Weiterhin soll auf diese Weise eine gleichmäßige Wasserverteilung während eines Hochtemperaturbetriebs ermöglicht werden. Obwohl die porösen Schichten beispielsweise mit verdünnter Schwefelsäure imprägniert sind, kann es vorkommen, dass die verdünnte Schwefelsäure und ein Teil des Wassers über das Reaktionsgas aus der Brennstoffzelle ausgetragen werden. Mittels des Leitungsabschnitts und des Flüssigkeitsvorratsbehälters ist es möglich, die porösen Schichten mit verdünnter Schwefelsäure zu beaufschlagen. Auf diese Weise solle ein effizienterer Betrieb der Brennstoffzelle über einen längeren Zeitraum bei hohen Temperaturen möglich sein.

Aus der JP S60 121680 A gehen ein Verfahren und eine Vorrichtung zur Wiederauffüllung von Phosphorsäure in phosphorsauren Brennstoffzellen hervor. Hierbei scheint vorgesehen zu sein, in die Kathodenversorgung der einer einzelnen oder auch mehrerer Zellen Phosphorsäure zuzufügen. Zu diesem Zweck ist an die Luft- bzw. Sauerstoffversorgung des Brennstoffzellenstabes ein Phosphorsäurebehälter mit einem Ventil angeschlossen. Dieser Phosphorsäurebehälter kann mit einem Inertgas derart beaufschlagt werden, dass über die sich in etwa senkrecht zu den Kanalstrukturen der Verteilerplatten erstreckenden Kathodenversorg atomisierte Phosphorsäure zusammen mit dem Inertgas, der Membran zuführbar ist. Die ist aber nur möglich wenn die Brennstoffzelle nicht in Betrieb ist.

Aufgabe der vorliegenden Erfindung ist es daher, eine Vorrichtung und ein Verfahren bereitzustellen, mit dem die Lebensdauer von Hochtemperatur-Polymerelektrolytmembran-Brennstoffzellen verlängert werden kann. Diese Aufgabe wird mit einer Vorrichtung gemäß Anspruch 1 sowie einem Verfahren gemäß Anspruch 14 gelöst. Vorteilhafte Ausgestaltungen sind in den davon abhängigen Unteransprüchen angegeben.

Erfindungsgemäß ist eine Vorrichtung zur Lebensdauerverlängerung einer Hochtemperatur-Polymerelektrolytmembran-Brennstoffzelle vorgesehen. Diese Vorrichtung umfasst einen HT-PEM-Brennstoffzellenstapel, wobei eine jede Zelle eine Versorgungsplatte mit Anodenkanalstruktur, eine Anoden-Gasdiffusionselektrode, eine elektrolythaltige Polymermembran, eine Kathoden-Gasdiffusionselektrode und eine Versorgungsplatte mit Kathodenkanalstruktur umfasst. Zudem ist zumindest ein mit Säure gefülltes Säurereservoir vorgesehen, das mit einem, in den Versorgungsplatten sich in etwa senkrecht zu den Kanalstrukturen erstreckenden, Verteilerkanal verbunden ist, wobei der Verteilerkanal mit zumindest einer der Gasdiffusionselektroden und/oder der Polymermembran zumindest einer der Zellen des Brennstoffzellenstapels derart in Verbindung steht, so dass zumindest einer der Gasdiffusionselektroden und/oder der Polymermembran zumindest einer der Zellen des Brennstoffzellenstapels Säure zuführbar ist

Dadurch, dass ein sich in etwa senkrecht zu den Kanalstrukturen erstreckender Verteilerkanal vorgesehen ist, ist es möglich, den Elektrolyten bzw. die Säure den Zellen auf einfache Weise zuzuführen, da die Säure über einen im Bereich der ersten und/oder der letzten Versorgungsplatte vorgesehen Anschluss zuführbar ist. Ein derartiges Zuführen wird als stirnseitiges Zuführen bezeichnet.

Würde man den Elektrolyten über einen sich parallel zur Ebene der Kanalstrukturen erstreckenden Kanal zuführen, d.h. einen Kanal der sich vom Inneren des Brennstoffzellenstapels durch seitliche Randbereiche des Brennstoffzellenstapels nach außen erstreckt, können in diesen Bereichen Dichtigkeitsprobleme auftreten, die den zuverlässigen Betrieb negativ beeinflussen würden. Dies liegt daran dass Brennstoffzellenstapel in durch Pressen und insbesondere durch Dichtelemente, wie z.B. Dichtrahmen insbesondere in ihren seitlichen Randbereichen dicht ausgebildet sind. Eine derartige Abdichtung eines sich aus diesen Randbereichen herauserstreckenden Kanals, insbesondere zu jeder Zelle hat daher zahlreiche konstruktive Probleme zur Folge.

Ein derartiger in der Membran ausgebildeter Kanal, der sich durch einen seitlichen Randbereich des Brennstoffzellenstapels erstreckt, ist in der DE 199 14 247 A1 gezeigt. Gemäß den in diesem Dokument offenbarten Ausführungsformen wird entweder die Membran zwischen zwei Versorgungsplatten derart gequetscht, dass eine effiziente Zuführung von Säure nicht möglich ist, oder es ist vorgesehen sämtliche Komponenten einer einzelnen Zelle im Randbereich abzudichten, was wohl nicht möglich ist, da es in jedem Fall zu einem Durchtritt von Phosphorsäure und/oder Reaktanden in unerwünschte Bereiche kommen würde.

Vorzugsweise wird einer jeden Zelle Säure zugeführt.

Im Rahmen der vorliegenden Erfindung wird unter einer Säure ein für HT-PEM-Brennstoffzellen geeigneter Elektrolyt, insbesondere Phosphorsäure oder Schwefelsäure, verstanden.

Als Elektrolytmembran kann vorzugsweise eine Polybenzimidazol(PBI)-Membran vorgesehen sein.

Unter Laborbedingungen wurden bei Hochtemperatur-Polymerelektrolyt-Brennstoffzellen Laufzeiten von über zehntausend Stunden bei einer Temperatur von 160 °C und einer Versorgung mit reinem Wasserstoff erzielt. Da bisherige Anwendungen keine erhöhten Anforderungen an die Lebensdauer hatten, wurden bei Hochtemperatur-Polymerelektrolytmembran-Brennstoffzellen keine Forschungsbemühungen zur Nachführung von Säure unternommen.

Der vorliegenden Erfindung liegt unter anderem die Erkenntnis zu Grunde, dass insbesondere bei Start-Stopp-Zyklen der Austrag von Säure begünstigt wird. Bei mobilen Anwendungen, bei denen vorwiegend HT-PEM-Brennstoffzellen und keine Phosphorsäurebrennstoffzellen eingesetzt werden, sind häufige Start-Stopp-Zyklen von großer Bedeutung.

Die Erfinder der vorliegenden Erfindung haben erkannt, dass eine Säurenachführung bei HT-PEM-Brennstoffzellen sowohl bei stationären als auch bei mobilen Anwendungen und insbesondere bei häufigen Start-Stopp-Zyklen eine längere Lebensdauer ermöglicht.

Zudem kann der Aufbau eines Brennstoffzellensystems vereinfacht werden, da Reformatreinigungsstufen eingespart oder verkleinert werden können, welche Brennstoff vor dem Eintritt in die Brennstoffzelle zurückhalten würden, um einen Säureaustrag durch Reaktion der Säure mit dem Brennstoff zu verhindern.

Eine einfache Systemarchitektur wird zudem dadurch ermöglicht, dass durch das Vorsehen einer Säurenachführung die Reformereinheiten im System reduziert werden können, da eine vollständige Reformierung nicht mehr zwingend erforderlich ist.

Im Gegensatz zu Phosphorsäurebrennstoffzellen ist es bei HT-PEM-Brennstoffzellen möglich, die Säurebeladung in den Elektrodenschichten zu reduzieren, da sie weniger mobil ist als in der Phosphorsäurebrennstoffzelle und die Polymermembran die Säure stärker bindet als die Elektrolytmatrix der Phosphorsäurebrennstoffzelle. Ursache hierfür ist die protolytische Reaktion der Phosphorsäure mit der Polymer-Trägermatrix, welche beispielsweise basische Imidazolgruppen aufweist. Durch eine geringere Säurebeladung in der Elektrode wird eine bessere stoffliche Versorgung (z.B. Luft) und eine geringere kinetische Hemmung des Elektrodenkatalysators erreicht. Während bei HT-PEM-Brennstoffzellen die Säure, z.B. Phosphorsäure, chemisch mit dem Polymer in einer Säure-Base-Reaktion interagiert, ist die Phosphorsäure in Phosphorsäurebrennstoffzellen lediglich physikalisch eingelagert. Idealerweise liegt bei HT-PEM-Brennstoffzellen eine optimale Säurebeladung im Elektrolytsystem vor, wobei die Elektroden gerade ausreichend Phosphorsäure aufweisen, um eine niederohmige ionische Anbindung des Katalysators zum Elektrolytsystem zu erreichen, aber nicht zu viel, um eine Zuführung der Reaktanden, also Luftsauerstoff oder Wasserstoff möglichst wenig zu behindern.

Aufgrund dieser Charakteristik weisen HT-PEM-Brennstoffzellen eine höhere Kinetik gegenüber einer Phosphorsäurebrennstoffzelle auf. Da aber ein Verlust von Säure durch eine Verschiebung der optimalen Konzentration zu einem Mangel an Säure führt, verschlechtert sich die Leistungsfähigkeit der Brennstoffzelle und die Lebensdauer wird aufgrund einer fehlenden Säure-Nachführung begrenzt.

Durch die höhere Elektrodenkinetik von HT-PEM-Brennstoffzellen im Vergleich zu Phosphorsäurebrennstoffzellen weist das Elektroden-Elektrolytsystem eine optimale Säuremenge auf. Durch Säureaustritt wird dieses Optimum verlassen und es kommt zu einer Degradation, welche die Lebensdauer beschränkt.

Um dennoch eine lange Lebensdauer der HT-PEM-Brennstoffzelle zu ermöglichen, wird Säure im Überschuss verwendet, meist einhergehend mit einer anfangs zu hohen Konzentration in den Elektroden und dickeren Elektrolytmembranen, welche einen hohen ionischen Widerstand verursachen. Eine Alternative, die Lebensdauer zu erhöhen ist, die HT-PEM-Brennstoffzelle bei niedrigen Temperaturen (z.B. 150 °C) zu betreiben, um den Austrag von Säure zu minimieren. Bei niedrigen Temperaturen ist jedoch die Leistungsdichte der Brennstoffzelle niedriger.

Um eine niedrige bzw. optimale Säurebeladung zu erzielen, können bei HT-PEM-Brennstoffzellen keine porösen Platten bzw. Bipolar-Platten verwendet, in die Säure eingelagert ist. Eine Verwendung Säure-getränkter Platten ist zudem produktionstechnisch aufwändiger und teurer. Daher kann bei HT-PEM-Brennstoffzellen verdampfte Säure bislang nicht wieder ersetzt werden, was zu einer wesentlich kürzeren Lebensdauer gegenüber Phosphorsäurebrennstoffzellen führt.

PEM-Brennstoffzellen auf Basis derartiger Elektrolytmembranen werden bei Betriebstemperaturen oberhalb der Siedetemperatur von Wasser betrieben. Ein Protonentransport ist nicht an das Vorhandensein von Wasser im Elektrolytsystem gebunden. Bei diesen Betriebsbedingungen fällt Wasser in gasförmiger Form an.

Ein deutlicher Nachteil von Brennstoffzellen auf Basis einer mit Phosphorsäure dotierten Polymermembran, im Gegensatz zu Niedertemperatur-PEM-Brennstoffzellen, liegt allerdings darin, dass
- unter Betriebsbedingungen, die zu Wasser in kondensierter Form führen, der Elektrolyt verdünnt und in Wasser gelöst ausgetragen werden kann.
- der Elektrolyt aufgrund seines Dampfdrucks bei höheren Temperaturen gasförmig ausgetragen wird.
- der Elektrolyt im Fall von mit Reformatgas betriebenen Brennstoffzellen mit nicht umgesetztem Brennstoff Verbindungen, wie Trimethyl-Phosphorsäureester, bilden kann, die gasförmig oder flüssig ausgetragen werden können.

Dieser Effekt wird auch als "Leaching" bezeichnet. Als Folge dessen nimmt mit der Zeit die lonen- bzw. Protonenleitfähigkeit der Membran und/oder der Elektrode ab, was zu einer Erhöhung des Zelleninnenwiderstands und damit zu einer Verringerung der Zellleistung führt.

Der vorliegenden Erfindung liegt die Erkenntnis zugrunde, dass durch eine Zu- bzw. Nachführung von Säure wesentliche Nachteile von HT-PEM-Brennstoffzellen vermieden werden können und deren Vorteil gegenüber der Phosphorsäurebrennstoffzelle, der in der günstigeren Säurekonzentration im Elektrodenelektrolytraum liegt, erhalten bleibt.

Erfindungsgemäß weist die Brennstoffzelle ein mit Säure gefülltes Säurereservoir auf, das einen freien Durchgang, insbesondere zum Gasdiffusionssubstrat, aufweisen kann, über den Säure in flüssiger Form durch das Gasdiffusionssubstrat hindurch in die Elektrode (Elektrodenschicht) eintritt und von dort an die Polymermembran abgegeben wird, bis diese wieder einen ausreichenden Säureanteil aufweist.

Eine flächige Verteilung der Säure findet hierbei über die Elektrodenschicht, das Gasdiffusionssubstrat und die Polymermembran statt. Insbesondere in der Grenzschicht zwischen Elektrodenschicht und Polymermembran findet eine Verteilung der Säure statt, wobei diese an der Kathode aufgrund der Bildung von Produktwasser höher als an Anode ist. Ein Teil der Säure wird von bzw. aus der Membran an die der Säurezuführung gegenüberliegende Elektrode abgegeben.

Unter einem freien Durchgang ist jede kanalartige Struktur zu verstehen auch wenn diese als Kapillare oder als Transporthilfe oder als Zuführelement ausgebildet ist. Unter einem Säurereservoir wird im Rahmen der vorliegenden Erfindung ein mit Säure gefüllter Vorratsbehälter oder ein Raum bzw. ein Reservoir oder auch ein in die Versorgungsplatte integriertes System mit verschiedenen Leitungsabschnitten bzw. Kanälen und insbesondere auch ein Zuführkanal oder auch ein Zuführsäurereservoir verstanden.

Das Säurereservoir kann in die Versorgungsplatte integriert sein und kann über einen Leitungsabschnitt mit einem Vorratsbehälter verbunden sein. In den Leitungsabschnitt kann eine Zuführeinrichtung, wie z.B. eine Pumpe integriert sein.

Insbesondere bei einer PBI-Membran sollte die Zuführung der Säure in den aktiven Bereich der Membran, d.h. in den Bereich, in dem Protonenleitung stattfindet (Protonenleitung findet zwischen den Bereichen der Elektroden statt, in welchen die Anoden- und Kathodenreaktion stattfindet) bzw. zumindest in dessen Randbereich, erfolgen. da der Säuretransport auch in den Elektroden und insbesondere in dem aktiven der Membranelektrodensystem effizient ist.

Daher erfolgt die Säurezuführung über entsprechende Mittel, die nachfolgend noch genauer beschrieben sind zumindest in einen Randbereich des aktiven Bereichs der PBI-Membran, dort wo die Säure für die Reaktion benötigt wird. Ein Quetschen der Membran vermindert den Säuretransport erheblich.

Die Vorrichtung kann eine Steuereinrichtung aufweisen, die die Zuführeinrichtung derart ansteuert, dass eine kontrollierte gesteuerte Zuführung von Säure in eine jede Zelle eines Brennstoffzellstapels möglich ist. Die Steuerparameter können an Hand von Lebensdauer und/oder Leistungskennlinien ermittelt werden.

Das integrierte Verteilersystem der Vorrichtung kann einen Verteilerkanal aufweisen, der sich senkrecht zur Anoden- und zur Kathodenkanalstruktur bzw. den Versorgungsplatten durch alle Zellen eines Brennstoffzellenstapels erstreckt. Von diesem Verteilerkanal zweigt ein in der Ebene der Kanalstrukturen ausgebildeter und im Randbereich der Versorgungsplatte angeordneter Verbindungskanal ab, der mit einem, ebenfalls in der derselben Ebene liegenden, Zuführkanal verbunden ist.

Der Zuführkanal kann im Bereich der Kanalstruktur, daneben oder diese umgebend angeordnet sein.

Über diese Kanäle kann Säure von außerhalb der Brennstoffzelle den einzelnen Zellen des Brennstoffzellenstapels zugeführt werden.

Da bei vertikaler Ausrichtung der Versorgungsplatte ein schwerkraftbedingtes Abfließen der Säure aus dem Zuführkanal zum Beispiel durch das poröse Gasdiffusionssubstrat in angrenzende darunterliegende Versorgungskanäle eventuell unerwünscht ist, kann der Zuführkanal bevorzugt im unteren Teil der Versorgungsplatte (nahe der Auflagefläche des Brennstoffzellenstapels) angeordnet sein.

Weiterhin kann in den Verbindungskanal und/oder den Zuführkanal ein Reservoir integriert sein. Das Reservoir kann als Aussparung in der Versorgungsplatte ausgebildet sein. Dieses Reservoir dient als Puffer und/oder als Zudosierhilfe.

Das Reservoir kann auch lediglich ein aufgeweiteter Abschnitt des Verbindungs- und oder des Zuführkanals sein. Das Volumen des Reservoirs beträgt zumindest 0,01 ml bis etwa 0,5 ml.

Erfindungsgemäß kann auch vorgesehen sein, dass die Vorrichtung keinen externen Vorratsbehälter aufweist. Die Säure wird dann nur aus zumindest einem internen Reservoir zugeführt. Wenn diese leer sind, können im Rahmen eines Säureservices die Reservoirs wieder mit Säure befüllt werden. Beispielsweise kann vorgesehen sein, dass die einzelnen Reservoirs einer jeden Versorgungsplatte über einen Verteilerkanal miteinander derart in Verbindung stehen, dass alle Reservoirs von außen über einen verschließbaren Einfüllstutzen auf einmal bzw. nacheinander mit Säure befüllbar sind. Das Volumen eines entsprechenden Reservoirs beträgt je nach Größe der Zellfläche zumindest 0,1 ml bis etwa 5 ml und insbesondere zumindest 0,2 bis 2,5 ml. Eine derartige Vorrichtung stellt einen separaten Erfindungsgedanken dar.

Die einzelnen Komponenten zur Säurezuführung umfassend den Verbindungskanal, das Reservoir und den Zuführkanal können auch als Aussparung in den Dichtrahmen der Zelle und/oder einer Polymerfolie (Subgasket), die einen Verstärkungsrahmen ausbildet, ausgebildet sein.

Gemäß einer weiteren Ausführungsform der erfindungsgemäßen Vorrichtung kann auch vorgesehen sein, dass der Verstärkungsrahmen oder die Polymermembran, z.B. eine PBI-Membran, einen umlaufenden Randabschnitt aufweist. Im Randabschnitt sind dann zwei oder mehr übereinander angeordnete Polymerfolien vorgesehen, die in ihren Grenzschichten Kapillaren ausbilden, d.h. dass der Spalt bzw. Raum zwischen den Folien den Säure Transport durch Kapillarkräfte ermöglichen. An Stelle einer Polymerfolie kann sich auch ein Randbereich der Elektrolytmembran in diesen Bereich erstrecken. Hierbei ist dann vorgesehen, dass die Säure über die Kapillaren, die ein Zuführelement im Sinne der vorliegenden Erfindung darstellen, der Zelle zuführbar ist. Ein Bereich des Randabschnitts erstreckt sich in den Bereich des Verteilerkanals, so dass über diesen Bereich Säure in die Polymermembran und von dort auch entsprechend in die Anoden-Gasdiffusionselektrode und/oder die Kathoden-Gasdiffusionselektrode nachgeführt werden kann.

Um eine bessere oder schnellere Verteilung der Säure direkt auf der Membran zu ermöglichen, kann als Transporthilfe für Säure auch ein Docht oder ein flächig angeordnetes Netz oder Fasern, mit geeigneter Ausrichtung zwischen Elektrode und Membran, positioniert sein. Die Fasern sind derart beschaffen, dass sie Säure leiten und wenn möglich derart viel Säure aufnehmen, dass sie die Protonenleitung der Kombination aus Elektrolytmembran und Transporthilfe nicht hemmen. Um den ionischen Widerstand der Transporthilfe (z.B. Fasern) gering zu halten, ist diese dünn. Anstatt von Fasern oder eines Netzes kann auch ein dünnes Vlies oder ein anderes säureleitendes Material, wie Siliziumcarbid, verwendet werden. Um eine zu starke Abgabe von Säure an die Kathode zu vermeiden, ist es vorteilhaft, diese Transporthilfe auf der Anode zu platzieren und somit die Kathodenelektrode über die Membran zu versorgen.

Die Transporthilfe kann auch direkten Kontakt mit der Säure über einen Zuführkanal aufweisen.

Auch gemäß dieser Ausführungsform wird über den Zuführkanal bzw. über das Säurereservoir die anliegende Elektrode und Membran mit Säure versorgt. Die Membran gibt wiederum Säure an die gegenüberliegende Elektrodenschicht ab.

Gemäß einer weiteren Ausführungsform kann auch eine Kanalstruktur im Brennstoffzellenstapel zum Zirkulieren von Säure ausgebildet sein.

Die Säurenachführung kann hierbei kontinuierlich oder diskontinuierlich (z.B. in Intervallen von 500 Betriebsstunden) erfolgen. Dieses Verfahren hat den Vorteil, dass sichergestellt wird, alle Kanäle blasenfrei, also gleichmäßig, mit Säure zu versorgen. Diese Kreislaufversorgung kann mit einer Zudosierpumpe mit konzentrierter Säure versorgt werden. Dies ist insbesondere vorteilhaft, wenn die Säure aufgrund ihrer hygroskopischen Eigenschaften Wasser aus den Zellmedien aufnimmt und deren Säurekonzentration sinkt.

Gemäß einer weiteren nicht erfindungsgemäßen Ausführungsform kann auch vorgesehen sein, die Säure über einen sich parallel zur Ebene der Kanalstrukturen erstreckenden Kanal zuführen, d.h. einen Kanal der sich vom Inneren des Brennstoffzellenstapels durch seitliche Randbereiche des Brennstoffzellenstapels nach außen erstreckt.

Demgemäß erstreckt sich eine Transporthilfe, ein Zuführelement oder zumindest zwei Lagen einer Polymerfolie durch den seitlichen Randbereich, um den Zellen Säure zuzuführen.

Bei einer derartigen Ausführungsform kann vorgesehen sein, den einzelnen Zellen separat Säure zuzuführen. Hierfür können entsprechende Dosierpumpen vorgesehen sein.

Gemäß allen Ausführungsformen wird die unterschiedliche Philie der Bestandteile der Membranelektrodeneinheit, auch das Gasdiffusionssubstrat, gegenüber Säure ausgenutzt, um sowohl in der Membran als auch in den Elektrodenschichten eine optimale Säurekonzentration einzustellen.

Im Folgenden wird ein Verfahren zur Lebensdauerverlängerung von Hochtemperatur-Polymerelektrolytmembran-Brennstoffzellen beschrieben.

Gemäß einem erfindungsgemäßen Verfahren zur Lebensdauerverlängerung von Hochtemperatur-Polymerelektrolytmembran-Brennstoffzellen ist vorgesehen, zumindest einer Zelle einer Brennstoffzelle Säure aus einem Säurereservoir zuzuführen.

Vorzugsweise ist vorgesehen, Säure in alle Zellen nachzuführen. In Ausnahmefällen können auch nicht alle Zellen mit einer Säurenachführung ausgestattet werden, zum Beispiel wenn eine ungleiche Temperaturverteilung vorherrscht, wobei einige Zellen einen niedrigeren Säureverlust aufgrund niedrigerer Temperatur aufweisen.

Die Zuführung kann über ein Säurereservoir bzw. über einen Zuführkanal mit einem freien Durchgang zur GDE oder zur Membran derart erfolgen, dass die Säure in die Elektrodenschicht und von dort in die Polymermembran oder umgekehrt eintritt.

Gemäß dem erfindungsgemäßen Verfahren zur Lebensdauerverlängerung von Hochtemperatur-Polymerelektrolytmembran-Brennstoffzellen kann die Zuführung über den Säurespeichers derart erfolgen, sodass die Säure über einen freien Durchgang des Säurerespeichers in das Gasdiffusionssubstrat, von dort in die Elektrodenschicht und von dort über Diffusionsprozesse in die Polymermembran eintritt.

Weiterhin kann ein Teil der Säure an die GDE auf der gegenüberliegenden Seite der Membran abgegeben werden.

Da bei den meisten Membranelektrodeneinheiten das Gasdiffusionssubstrat und/oder die Elektrodenschicht aufgrund ihrer Diffusionseigenschaften (Porosität, Benetzung) besser Säure leitet als der Polymerelektrolyt, findet die Verteilung der Säure, also der Säuretransport, in der Zelle überwiegend in den GDEs statt.

Bei der Säureleitung in der GDE findet ein Transport in dem Substrat und der mikroporösen Struktur der Elektrodenschicht statt. Häufig ist unter der Elektrodenschicht eine zusätzliche Schicht aus hochporösem Kohlenstoff vorgesehen.

Dieser Transportweg wird durch Degradationsprozesse (z.B. Kohlenstoffkorrosion) der Elektrodenschicht sowie des Gasdiffusionssubstrats begünstigt, welche einen hydrophileren Charakter der Kohlenstoffoberflächen zur Folge haben. Auch das an der Kathode entstehende Produktwasser bzw. wasserhaltige Medien an der Anode fördern diesen Diffusionsweg, da das Säurevolumen in der Elektrode hierbei zunimmt. Da die Elektrodenschicht mit Säure benetzt ist, kann diese trotz eines eventuell hohen Anteils an hydrophoben Bindern, wie PTFE, eine gute Benetzungsfähigkeit aufweisen.

Erfindungsgemäß können auch oberflächenaktive Substanzen (z.B. Isopropanol, Tenside) zur Säure hinzugegeben werden, um den Durchtritt durch das Gasdiffusionssubstrat zu beschleunigen.

Um den Transport in der Elektrode zu fördern, können in der Elektrodenschicht auch säureleitende Komponenten (z.B. Glasfasern) integriert sein. Dies könnte beispielsweise dadurch verwirklicht werden, dass im Gasdiffusionssubstrat spezielle Fasern (z.B. Glasfasern) eingebracht bzw. eingewebt werden, die gut Säure leiten und diese schlecht (in geringen Mengen) an das Substrat abgeben (z.B. Hohlfasern), sodass der Säuretransport im Wesentlichen über die Fasern ermöglicht wird. Die speziellen Fasern haben eine derart große Maschenweite, dass der Gastransport kaum beeinträchtigt wird. Ein Netz aus solchen Fasern kann auch zwischen Flowfield und Gasdiffusionssubstrat positioniert sein. Außerdem können auch Schichten (z.B. mit geringerem PTFE-Anteil) in die GDE integriert sein.

Auch das Gasdiffusionssubstrat kann Stellen mit höherer Hydrophilie (z.B. geringerer PTFE-Anteil) aufweisen.

Kanäle bzw. Einschnitte zum Zuführen von Säure können auch in der Gasdiffusionselektrode ausgebildet sein. Damit sind z.B. Ausstanzungen, einfache Einschnitte oder dünne Aussparungen (<1 mm) gemeint. Ein Hydrophilisieren von Bereichen der Gasdiffusionselektrode zur Unterstützung des Phosphorsäuretransportes kann durch Plasmabehandlung, mittels Laser oder chemischer oder physikalischer Oberflächenbehandlung erfolgen. Diese Vorkehrungen sind insbesondere in den Bereichen der Elektrode vorgesehen welche mit Phosphorsäure benetzt werden.

Die Nutzung dieses Diffusionsweges durch das Gasdiffusionssubstrat zur Nachführung von Säure im Brennstoffzellenstapel bietet sich insbesondere bei HT-PEM Brennstoffzellen an. Bei Phosphorsäurebrennstoffzellen wird vor allem der Pfad über den porösen SiC-Elektrolyten für die Phosphorsäurenachführung genutzt, da bei diesen das Problem der Membranquellung, wie diese bei HT-PEM Polymermembranen bei direktem Kontakt mit konzentrierter Phosphorsäure (insbesondere bei hohen Temperaturen) auftritt, nicht besteht. Zudem läuft die Säurewanderung in HT-PEM Polymermembranen innerhalb der Polymermatrix, in welcher die Säuremoleküle komplexiert sind, nur sehr langsam ab, wohingegen der Säuretransport innerhalb der Poren der SiC-Elektrolytschicht von Phosphorsäurebrennstoffzellen durch Kapillarkräfte angetrieben wird.

Gemäß dem Verfahren kann auch vorgesehen sein, dass die Säure aus einem Säurereservoir direkt über zumindest einen mit der Säure aus dem Säurereservoir in Kontakt stehenden Abschnitt der Polymermembran aus dem Säurereservoir in die Polymermembran eintritt. Um eine Quellung der Polymermembran zu verhindern, kann die Säure zum Beispiel mit einer hydrophilen hochsiedenen Flüssigkeit, wie z.B. Ethylenglycol, verdünnt sein.

In der Regel ist es sinnvoll, wenn die Zuführung der Säure in die MEA langsam geschieht, da sonst lokal zu viel Säure in das Gasdiffusionssubstrat oder in die MEA eindringt. Zu hohe Zuführgeschwindigkeit hat zur Folge:
- Wenn zu viel Säure in die Elektrode gelangt, kann die Gasversorgung, insbesondere die Sauerstoff-Versorgung, gehemmt werden, was die Elektrodenkinetik verschlechtert.
- Wenn zu viel Säure in die Elektrode gelangt, kann diese wieder aus dem Gasdiffusionssubstrat austreten und in die Medienkanäle (Anoden und Kathodenkanäle) fließen. Dies gilt es zu vermeiden, da einzelne Kanäle verstopft oder zumindest deren Strömungsquerschnitte unregelmäßig verringert werden. Hierdurch wird eine Medienungleichverteilung zwischen den Zellen hervorgerufen.
- Wenn sich eine zu hohe Säurekonzentration in Teilen des Elektrolytsystems, bestehend z.B. aus PBI und Säure einstellt, da der Säuretransport innerhalb des Elektrolytsystems zu langsam von statten geht, kann eine starke Quellung der Elektrolytmembran hervorgerufen werden. Dadurch wird die Membran mechanisch instabil und es können eventuell Risse die Folge sein.

Um zu verhindern dass bei einer schnellen Säurezuführung Kanäle der Versorgungsplatte verstopfen, kann die Versorgungsplatte, vorzugsweise ein Kathodenflowfield, vorgesehen sein, dessen Kanäle derart große Querschnitte aufweisen, dass ein Verschluss der Kanäle durch Benetzung der Kanalwände bei Säurenachführung nicht auftritt oder die Querschnitte der Kanäle könne derart klein sein, dass im Falle eines Verschlusses durch Säure die Säure durch die Strömung des Mediums aus dem Kanal getrieben wird, sodass die Medienversorgung im Kanal nicht unterbrochen wird.

Um die genannten Probleme zu verhindern, kann die Zuführungsgeschwindigkeit mittels folgender Maßnahmen verringert werden:
- Über die Schwerkraft: wenn das Reservoir sich unterhalb oder in Höhe des Zuführkanales befindet ist die Druckkraft geringer (kommunizierende Röhren) und der Säurefluss ist langsamer als wenn der Flüssigkeitsspiegel der Säure höher liegt.
- Über einen Strömungswiderstand, welcher sich z.B. durch entsprechend dünne Verbindungskanäle einstellt.
- Über einen Körper, der die Säure aufsaugt und langsam abgibt. Dieser Körper kann sich in einem Reservoir befinden. Über einen Körper mit einem hohen Diffusionswiderstand, zum Beispiel ein Körper, der aufgrund seiner Porosität eine Absorption ermöglicht. Die Absorption aufgrund von Kapillarkräften des Körpers ist jedoch geringer als die Säureaffinität des Elektroden-Elektrolytsystems. Ein derartiger Körper sollte im Bereich vor der MEA bzw. im Reservoir angeordnet sein. Der Körper kann z.B. den Zuführkanal räumlich von der MEA trennen. Der Körper kann im Zuführkanal bzw. im Säurereservoir angeordnet seine. Der Körper kann auch im Zuführsystem (Verteilerkanal, Verbindungskanal, Reservoir) angeordnet sein.

Ein Körper bzw. Zuführelement oder auch die Transporthilfe kann ein Membranelement, ein Docht, ein Gewebe, ein Netz, eine oder mehrere Fasern, ein Vlies oder zwischen Polymerfolien ausgebildete Kapillaren sein.

Das Zuführelement kann zwischen Polymermembran und Gasdiffusionselektrode oder auch in einem an eine der beiden angrenzenden Bereich angeordnet sein.

Weiterhin kann auch eine rasche Zuführung der Säure geeignet sein. So kann beispielsweise der Abfluss der Säure aus dem Zuführkanal in die Versorgungskanäle (im Stillstand der Brennstoffzelle) in Kauf genommen oder beabsichtigt werden, wobei die Säure innerhalb von zum Beispiel einigen Stunden in die GDE einzieht und sich über die Elektrodenschicht und/oder die Membran verteilen kann.

Die Erfindung wird im Folgenden anhand der Zeichnungen näher erläutert. Diese zeigen in:
- Fig. 1: eine schematische Darstellung einer erfindungsgemäßen Vorrichtung mit einem Brennstoffzellenstapel mit Säurereservoir, Vorratsbehälter, Leitungsabschnitt und Zuführeinrichtung,
- Fig. 2: eine schematische Darstellung in einer Draufsicht einer Versorgungsplatte mit Säurereservoir einer erfindungsgemäßen Vorrichtung,
- Fig. 3: eine schematische Darstellung in einer Draufsicht einer weiteren Ausführungsform einer Versorgungsplatte mit Säurereservoir einer erfindungsgemäßen Vorrichtung,
- Fig. 4: eine schematische Darstellung in einer Draufsicht einer weiteren Ausführungsform einer Versorgungsplatte mit Säurereservoir einer erfindungsgemäßen Vorrichtung,
- Fig. 5: eine schematische Darstellung in einer Draufsicht einer weiteren Ausführungsform einer Versorgungsplatte mit einer Gasdiffusionselektrode, einer Polymer-folie, einem Dichtrahmen und einem Säurereservoir einer erfindungsgemäßen Vorrichtung,
- Fig. 6: die Ausführungsform aus Figur 5 in einer seitlich geschnittenen Ansicht entlang der Linie A - A,
- Fig. 7: eine schematische Darstellung in einer Draufsicht einer weiteren Ausführungsform der in Figur 5 gezeigten Ausführungsform,
- Fig. 8: eine schematische Darstellung in einer Draufsicht einer weiteren Ausführungsform einer Versorgungsplatte mit einer Polymermembran, einer Gasdiffusions-elektrode, einem Dichtrahmen und einem Säurereservoir einer erfindungsgemäßen Vorrichtung,
- Fig. 9: eine schematische Darstellung in einer Draufsicht einer weiteren Ausführungsform einer Versorgungsplatte einer erfindungsgemäßen Vorrichtung,
- Fig. 10: eine schematische Darstellung in einer Draufsicht einer alternativen Ausführungsform einer Versorgungsplatte mit Säurereservoir,
- Fig. 11: eine schematische Darstellung in einer Draufsicht einer alternativen Ausführungsform einer Versorgungsplatte mit Säurereservoir,
- Fig. 12: eine schematische seitlich geschnittene Detailansicht einer Zelle eines Brennstoffzellenstapels gemäß einer weiteren Ausführungsform,
- Fig. 13: eine schematische seitlich geschnittene Detailansicht einer Zelle eines Brennstoffzellenstapels gemäß einer weiteren Ausführungsform, und
- Fig. 14: eine schematische seitlich geschnittene Detailansicht einer Zelle eines Brennstoffzellenstapels gemäß einer weiteren Ausführungsform.

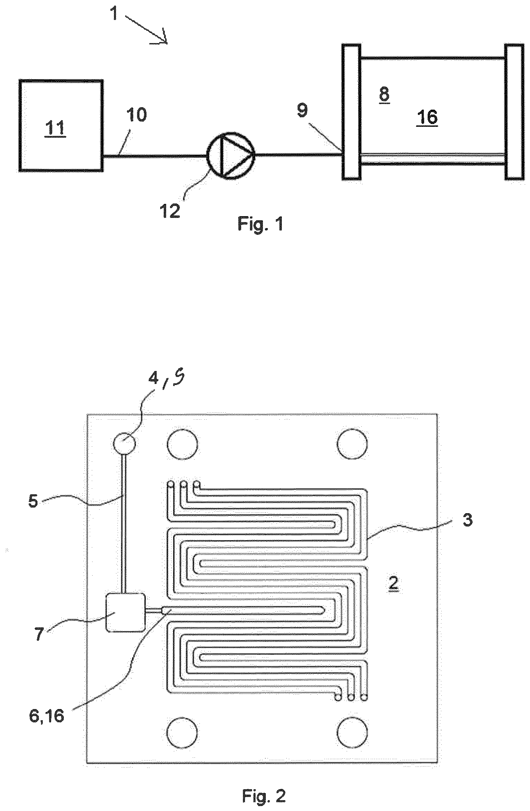

Eine erfindungsgemäße Vorrichtung 1 zur Lebensdauerverlängerung einer HT-PEM-Brennstoffzelle umfasst eine HT-PEM-Brennstoffzelle, sowie ein Säurereservoir . Die Brennstoffzelle 8 ist vorzugsweise ein aus mehreren Zellen ausgebildeter Brennstoffzellenstapel (Figur 1).

Die einzelnen Zellen des Brennstoffzellenstapels 8 umfassen eine Versorgungsplatte 2 mit einer Anodenkanalstruktur 3, eine Anoden-Gasdiffusionselektrode 17, eine elektrolythaltige Polymermembran 13, eine Kathoden-Gasdiffusionselektrode 17 und eine Versorgungsplatte 2 mit einer Kathodenkanalstruktur 3.

Die Versorgungsplatten 2 sind gemäß den nachfolgend beschriebenen erfindungsgemäßen Versorgungsplatten 2 ausgebildet.

Verteilerkanalabschnitte 4 der Versorgungsplatten 2 bilden im Brennstoffzellenstapel einen aus den einzelnen Verteilerkanalabschnitten 4 zusammengesetzten nach außen hin flüssigkeits- und gasdichten Verteilerkanal 9 aus (Figuren 2 bis 4).

Der Verteilerkanal 9 ist über einen Leitungsabschnitt 10 mit einem Vorratsbehälter 11 verbunden.

In den Leitungsabschnitt 10 ist eine Zuführeinrichtung 12, wie zum Beispiel eine Pumpe, integriert, die ausgebildet ist, um Säure aus dem Vorratsbehälter 11 in den Verteilerkanal 9 zu pumpen.

Der Leitungsabschnitt 10, die Zuführeinrichtung 12 und der Vorratsbehälter bilden ein Versorgungssystem 18 aus.

Es ist eine Steuereinrichtung (nicht dargestellt) vorgesehen, um die Zuführung bzw. Zudosierung von Säure in den Brennstoffzellenstapel zu steuern.

Im Folgenden wird eine erste Ausführungsform einer erfindungsgemäßen Versorgungsplatte 2 mit einer Kanalstruktur 3 und Zuführsäurereservoir 16 beschrieben (Figur 2).

Die Kanalstruktur 3 kann eine Anodenkanalstruktur oder eine Kathodenkanalstruktur sein.

Die Versorgungsplatte ist plattenförmig mit zwei Oberflächenseiten und vier Stirnseiten, aus einem elektrisch leitfähigem Material, wie zum Beispiel Graphit oder einem graphithaltigen Werkstoff, ausgebildet.

Sie kann auch aus einem geeigneten metallischen Werkstoff ausgebildet sein. Weiterhin kann die Kanalstruktur 3 nur auf einer Oberflächenseite oder auch auf beiden Seiten der Versorgungsplatte ausgebildet sein.

Die Kanalstruktur 3 ist zu einer Oberflächenseite hin offen ausgebildet und verläuft beispielsweise mäanderförmig.

In zumindest einer Ecke der Versorgungsplatte 2 ist ein als Durchgangsbohrung ausgebildeter Verteilerkanalabschnitt 4 angeordnet.

Der Verteilerkanalabschnitt 4 ist senkrecht zur Ebene angeordnet, in der die Kanalstruktur 3 ausgebildet ist.

Der Verteilerkanalabschnitt 4 ist über einen Verbindungskanal 5, welcher in der gleichen Ebene wie die Kanalstruktur 3 verläuft und ebenfalls zu einer Oberflächenseite hin offen ausgebildet ist, mit einem Reservoir 7 zum Aufnehmen von Säure verbunden.

Das Reservoir 7 ist beispielsweise eine zur Oberflächenseite hin offene, halbkugelförmige oder rechteckförmige Ausnehmung oder auch ein breiter bzw. aufgeweiteter Kanal.

Vom Reservoir 7 zweigt ein, sich in etwa mittig in den Bereich der Kanalstruktur 3 erstreckender, und ebenfalls zu einer Oberflächenseite hin offen ausgebildeter Zuführkanal 6 ab.

Gemäß dieser Ausführungsform ist der Zuführkanal 6 das Zuführsäurereservoir 16, über das Säure in eine Zelle eines Brennstoffzellenstapels 8 nachgeführt wird. Die Nachführung erfolgt dadurch, dass die im Zuführkanal angeordnete Säure in direktem Kontakt mit dem Gasdiffusionssubstrat steht.

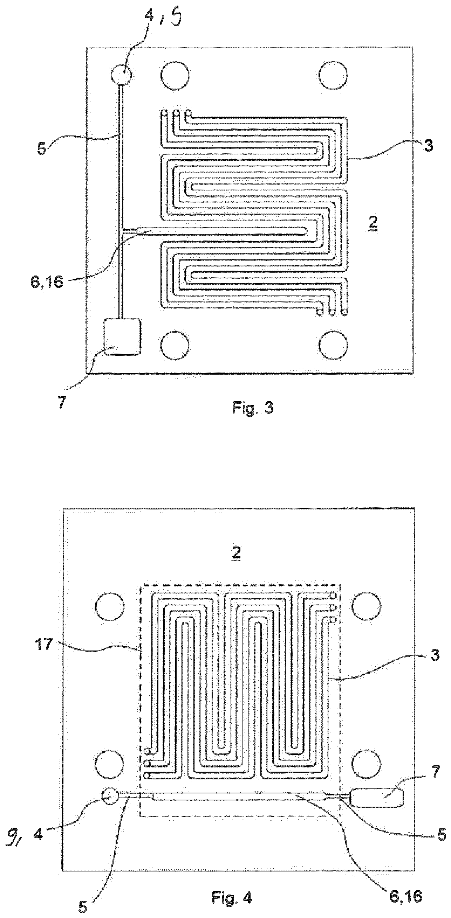

Im Folgenden wird eine zweite Ausführungsform einer erfindungsgemäßen Versorgungsplatte 2 mit einer Kanalstruktur 3 und Zuführsäurereservoir 16 beschrieben (Figur 3). Sofern nichts anderes beschrieben ist, weist diese Versorgungsplatte die gleichen Merkmale auf, wie die vorstehend beschriebene Versorgungsplatte gemäß der ersten Ausführungsform.

Gemäß der zweiten Ausführungsform ist das Reservoir 7 an der Seite der Versorgungsplatte angeordnet und ebenfalls mit dem Verbindungskanal 5 verbunden.

Der Zuführkanal 6, der wiederum das Zuführsäurereservoir 16 ausbildet, zweigt in etwa auf halber Länge des Verbindungskanals 5 in den Bereich der Kanalstruktur 3 ab und erstreckt sich in diesen.

Im Folgenden wird eine dritte Ausführungsform einer erfindungsgemäßen Versorgungsplatte 2 mit einer Kanalstruktur 3 und Zuführsäurereservoir 16 beschrieben (Figur 4). Sofern nichts anderes beschrieben ist, weist diese Versorgungsplatte die gleichen Merkmale auf, wie die Versorgungsplatte 2 gemäß der zweiten Ausführungsform auf.

In einem System verbaute Brennstoffzellenstapel weisen immer eine Auflageseite A auf, die in Richtung der Erdoberfläche weist. Gemäß dieser Ausführungsform ist die Auflageseite die in der Figur 4 dargestellte untere Stirnseite, das bedeutet die Auflageseite erstreckt sich orthogonal zur Ebene in der die Versorgungsplatten liegen.

Es ist im Rahmen der vorliegenden Erfindung auch möglich, dass die Auflageseite sich parallel zur Ebene, in der die Versorgungsplatten liegen, erstreckt.

Die gestrichelte Linie in Fig. 4 zeigt den Auflagebereich einer Gasdiffusionselektrode 17.

Der Verbindungskanal 5 weist zwei Abschnitte auf. Zwischen diesen beiden Abschnitten erstreckt sich der Zuführkanal 6 bzw. das Zuführsäurereservoir 16.

Im Unterschied zu den beiden vorstehend beschriebenen Ausführungsbeispielen der Versorgungsplatte erstrecken sich auch die Abschnitte des Verbindungskanals 5 in den Bereich, in dem das Gasdiffusionssubstrat 17 aufliegt.

Eine derartige Anordnung des Zuführkanals 6 verhindert, dass Säure auf Grund der Schwerkraft in die Kanalstruktur 3 der Versorgungsplatte 2 eintritt.

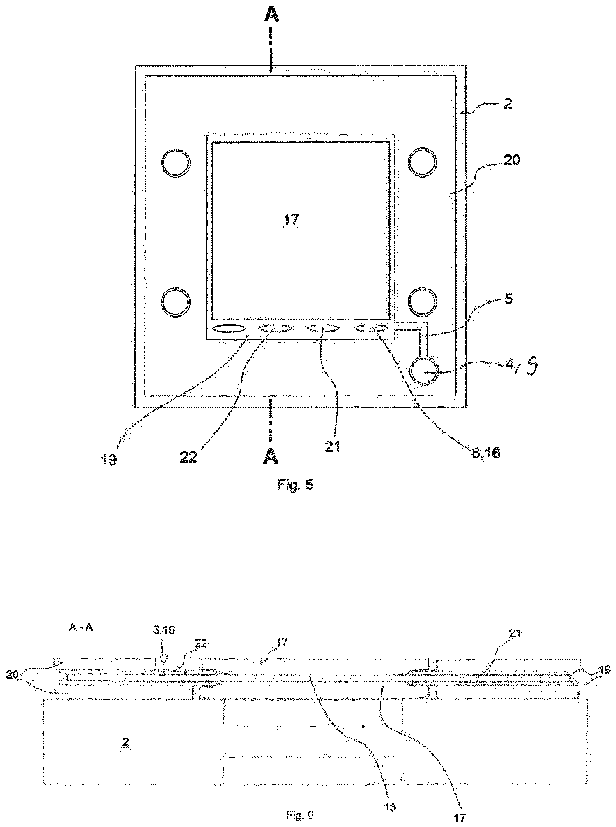

Im Folgenden wird eine vierte Ausführungsform einer erfindungsgemäßen Versorgungsplatte 2, mit einer Gasdiffusionselektrode 17, einem Polymerfolie (Subgasket) 19, einem Dichtrahmen 20 und einem Zuführsäurereservoir 16 beschrieben (Figur 5, Figur 6). Sofern nichts anderes beschrieben ist, weist diese Versorgungsplatte die gleichen Merkmale auf wie die vorstehend beschriebenen Versorgungsplatten.

Gemäß dieser Ausführungsform schließt die Polymermembran 13 nicht in etwa bündig mit dem Randbereich der Gasdiffusionselektrode 17 ab, sondern ragt umlaufend mit einem Randabschnitt 21 aus dem Bereich der Gasdiffusionselektrode 17 hervor. Oberseitig und unterseitig ist dieser Randabschnitt 21 der Polymermembran 13 von der rahmenförmig ausgebildeten Verstärkungsrahmen 19 (Polymerfolie) abgedeckt. Die Polymerfolie 19 weist eine Dicke von in etwa 25 µm auf.

Auf der Polymerfolie 19 bzw. der Versorgungsplatte 2 ist jeweils ein Dichtrahmen 20 angeordnet.

Die Versorgungsplatte 2 weist einen Verteilerkanalabschnitt 4 auf, der über einen Verbindungskanal 5 mit dem Zuführsäurereservoir 16 in Verbindung steht.

Der Verbindungskanal 5 ist als Ausnehmung im Dichtrahmen 20 ausgebildet.

Das Zuführsäurereservoir 16 wird oberseitig durch die Versorgungsplatte 2, seitlich durch den Dichtrahmen 20 und unterseitig durch den mit Ausnehmungen 22 versehenen Verstärkungsrahmen 19 sowie den Randabschnitt 21 der Polymermembran 13 begrenzt.

Die Ausnehmungen 22 der des Verstärkungsrahmens 19 erlauben einen Durchtritt von Säure aus dem Zuführsäurereservoir 16 in den Randabschnitt 21 der Polymermembran 13. Auf diese Weise kann Säure aus dem Zuführsäurereservoir 16 in die Polymermembran 13 und von dort in die Gasdiffusionselektrode 17 eintreten.

Dadurch, dass mehrere, bspw. vier, kleine Ausnehmungen 22 vorgesehen sind, wird ein großflächiges Quellen der Membran, was zu Rissen und Ablösung führen kann, verhindert.

Ein derartiges Zuführsäurereservoir ist bevorzugt parallel zur Auflagefläche des Brennstoffzellenstapels angeordnet, um ein Abfließen der Säure in die Kanalstruktur der Versorgungsplatte zu vermeiden.

Die Säure kann somit einerseits in die Polymermembran eintreten und andererseits auch in eine Grenzschicht, die zwischen der Polymerfolie 19 bzw. dem Subgasket und der Polymermembran ausgebildet ist, wobei dieser Eintritt durch Kapillarkräfte erfolgt.

Weiterhin dient die Polymerfolie zur Verstärkung der Membran im Randbereich.

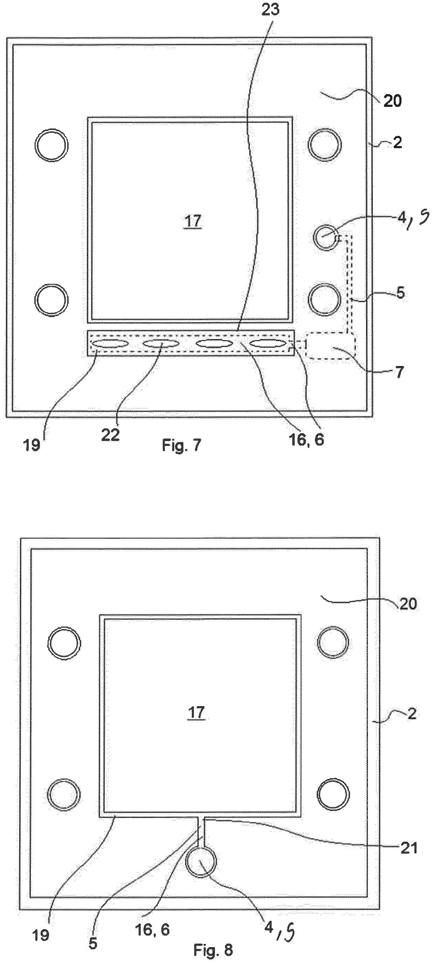

Im Folgenden wird eine fünfte Ausführungsform einer erfindungsgemäßen Versorgungsplatte 2 beschrieben (Figur 7). Diese weist, sofern nichts anderes offenbart ist, dieselben Merkmale wie die in Figur 5 dargestellte Ausführungsform auf.

Gemäß dieser Ausführungsform weist der Dichtrahmen 20 einen Steg 23 auf, der das Säurereservoir 16 zusätzlich begrenzt. Mittels dieses Stegs 23, der sich in etwa parallel zu einer Auflagefläche von einer Seite des Dichtrahmens 20 zu einer dieser Seite gegenüberliegenden Seite erstreckt, soll durch den vom Dichtrahmen ausgehenden Druck ein Quellen der Membran verhindert und ein unerwünschtes Eintreten von Säure in die Versorgungskanäle vermieden werden.

Weiterhin ist gemäß dieser Ausführungsform ein Reservoir 7 vorgesehen, wobei durch die gestrichelte Linie entsprechende Ausnehmungen in einer nicht dargestellten oberseitig auf dem Dichtrahmen aufliegenden Versorgungsplatte angedeutet sind. Das Reservoir 7 ist in den Verbindungskanal 5 integriert.

Im Folgenden wird eine weitere Ausführungsform einer Versorgungsplatte 2 beschrieben (Figur 8), die, sofern nichts anderes offenbart ist, die Merkmale der vorstehend beschriebenen Versorgungsplatten 2 aufweist.

Gemäß dieser Ausführungsform ist in der Versorgungsplatte 2 ein Verteilerkanalabschnitt 4 ausgebildet.

Der Dichtrahmen 20 weist eine als Verbindungskanal 5 ausgebildete Ausnehmung auf. Gemäß dieser Ausführungsform bildet die Ausnehmung 22 bzw. der Verbindungskanal 5 bzw. der Zuführkanal 6 das Zuführsäurereservoir 16 aus, da die Ausnehmung durch die Polymerfolie 19 begrenzt wird und somit im Zuführsäurereservoir 16 angeordnete Säure unmittelbar in Kontakt mit dem Randabschnitt 21 der Polymerfolie 19 und somit der Polymermembran 13 steht. Weiterhin hat die Säure zusätzlich oder alternativ direkten Kontakt mit der Gasdiffusionselektrode 17.

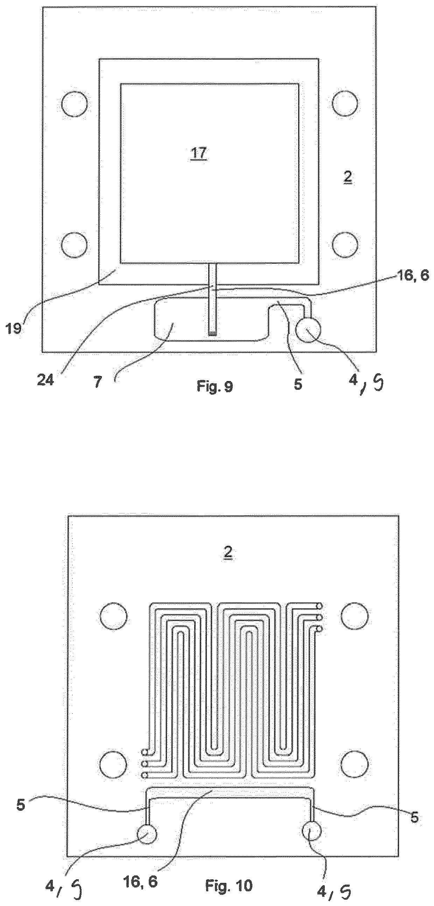

Im Folgenden wird eine weitere Ausführungsform einer Versorgungsplatte beschrieben (Figur 9). Sofern nichts anderes beschrieben ist weist diese Versorgungsplatte die gleichen Merkmale wie die vorstehend beschriebenen Versorgungsplatten auf.

In der Versorgungsplatte 2 ist ein Verteilerkanalabschnitt 4 vorgesehen, der über einen Verbindungskanal 5 in ein ebenfalls als Aussparung in der Versorgungsplatte ausgebildetes Reservoir 7 mündet. Ein Zuführkanal 6 bildet eine Öffnung vom Reservoir 7 bzw. einen Durchgang vom Reservoir 7 hin zur Gasdiffusionselektrode 17 und zur Polymermembran 13 aus.

Der im Randabschnitt 21 der Polymerfolie 19 angeordnete Bereich des Zuführkanals 6 bildet das Zuführsäurereservoir 16 aus.

Ein Glasfaserdocht 24 erstreckt sich von der Gasdiffusionselektrode 17 durch den Abschnitt des Verbindungskanals 5 bis in das Reservoir 7 welches gemäß dieser Ausführungsform ein Bestandteil des Zuführsäurereservoirs 16 ist.

In das Reservoir 7 eingebrachte Säure kann somit über den Docht 24, der bspw. ein Glasfaserdocht ist, durch Kapillarkräfte in die Elektrodenschicht der Gasdiffusionselektrode und/oder in die Membran gezogen werden.

Gemäß einer alternativen Ausführungsform einer Versorgungsplatte 2 (Figur 10), die im Folgenden beschrieben wird, weist die Versorgungsplatte 2 zwei Verteilerkanalabschnitte 4 auf.

Diese Verteilerkanalabschnitte 4 sind über jeweils einen Verbindungskanal 5 mit einem Zuführkanal 6 verbunden.

Gemäß dieser Ausführungsform ist eine Zirkulationseinrichtung (nicht dargestellt), wie z.B. eine Pumpe, vorgesehen, wobei ein Verteilerkanalabschnitt 4 als Zufuhr-Verteilerkanal ausgebildet ist, so dass mittels der Zirkulationseinrichtung Säure in den Zufuhr-Verteilerkanal eintritt, und der andere Verteilerkanalabschnitt 4 entsprechend als Abfuhr-Verteilerkanal ausgebildet ist, über den die Säure abgeführt wird.

Gemäß dieser Ausführungsform wird die Säure nicht nur zu- bzw. nachgeführt, sondern zirkuliert über Verteilerkanäle 9, die durch die Verteilerkanalabschnitte 4 ausgebildet sind, im Brennstoffzellenstapel.

Die Säure im Zuführkanal 6, der das Zuführsäurereservoir ausbildet, hat erneut direkten Kontakt mit der Gasdiffusionselektrode 17 und/oder der Polymermembran 13.

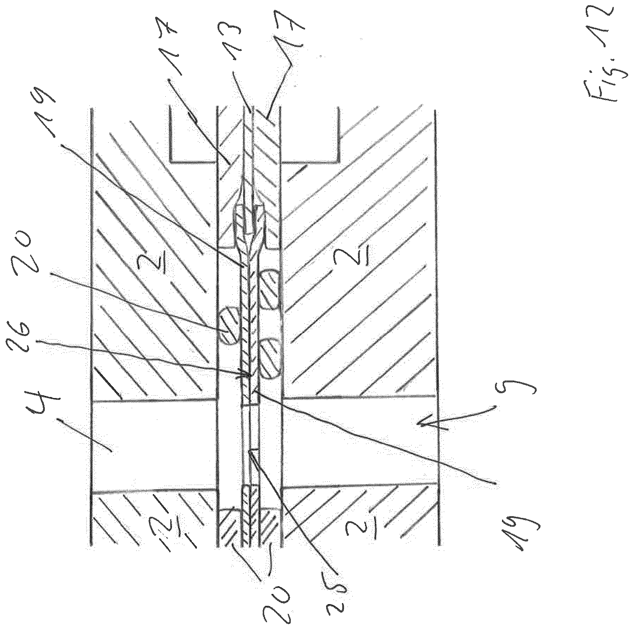

Im Folgenden werden weiterere Ausführungsformen der vorliegenden Erfindung mit Subgasket 19 beschrieben, die, sofern nichts anderes beschrieben ist, den vorstehend beschriebenen Ausführungsformen mit Subgasket 19 entsprechen (Figuren 12 bis 14).

Gemäß einer diesen Ausführungsformen wird die Säure über die Verteilerkanalabschnitte 4 bzw. den Verteilerkanal 9 den Zellen zugeführt.

Gemäß einer Ausführungsform erstrecken sich jeweils ein oberhalb und unterhalb der Polymermembran 13 angeordnetes Subgasket 19 (Polymerfolie; Verstärkungsrahmen) in den Verteilerkanal 4.

Im Bereich des Verteilerkanals 9 ist eine entsprechende Ausnehmung 25, d.h. ein Loch, in den Subgaskets 19 ausgebildet, um den Säurefluss durch den Verteilerkanal nicht 9 zu behindern.

In den Grenzschichten, in denen die Subgaskets 19 einander kontaktieren, sind Kappillaren 26 ausgebildet, über die die Säure in den reaktiven Bereich der Gasdiffusionselektroden 17 und/oder der Polymermembran 13 einer Zelle gelangt.

Diese Kapillaren 26 sind eine Tansporthilfe im Sinne der vorliegenden Erfindung.

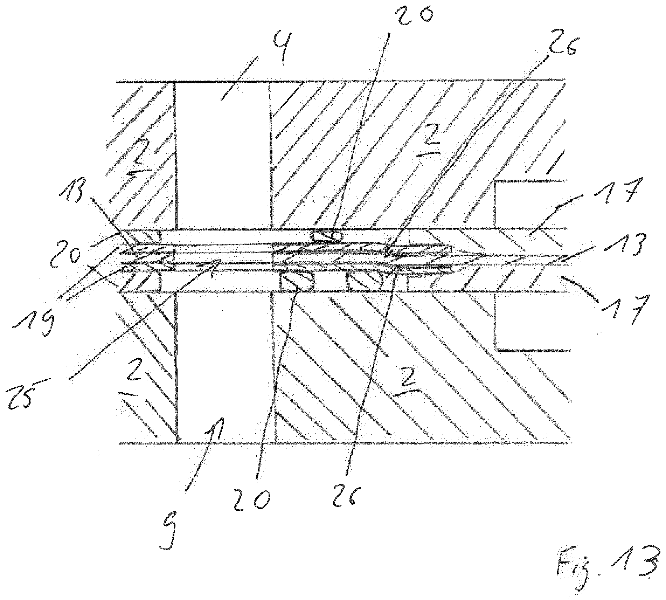

Gemäß einer weiteren Ausführungsform kann sich auch die Membran 13 und zumindest ein Subgasket 19 bis in den Verteilerkanal 9 erstrecken (Figur 13).

Im Bereich des Verteilerkanals 9 ist erneut eine entsprechende Ausnehmung 25, d.h. ein Loch, in dem Subgasket und der Membran ausgebildet.

In den Grenzschichten, in denen das Subgasket 19 und die Membran 13 einander kontaktieren, sind Kapillaren 26 ausgebildet, über die die Säure in den reaktiven Bereich der Gasdiffusionselektroden 17 und/oder der Polymermembran 13 einer Zelle gelangt.

Gemäß dieser Ausführungsform kann sich auch jeweils ein oberhalb und unterhalb der Polymermembran 13 angeordnetes Subgasket 19 sowie die Membran 13 selbst bis in den Verteilerkanal 9 erstrecken. Dann sind entsprechende Kapillaren 26 ober- und unterhalb der Membran 13 zwischen Membran 13 und Subgasket 19 ausgebildet.

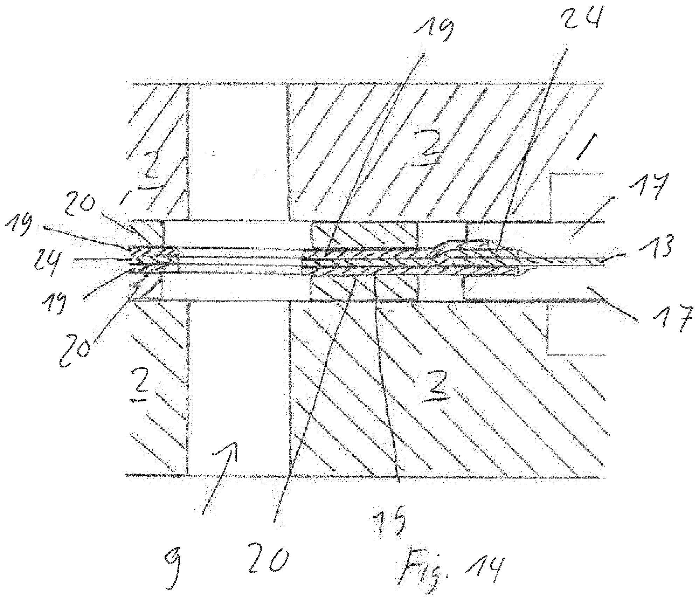

Um das Einbringen der Säure zu unterstützen kann, gemäß einer weiteren Ausführungsform, zwischen den Grenzschichten auch eine Transporthilfe, wie z.B. ein Netz, ein Vlies, ein Docht oder eine ähnliche Verteilerstruktur angeordnet sein Figur 14.

Im Folgenden werden verschiedene Ausführungsformen eines erfindungsgemäßen Verfahrens zur Lebensdauerverlängerung von Hochtemperatur-Polymerelektrolytmembran-Brennstoffzellen beschrieben.

Nachfolgend wird zwischen einer aktiven Säurenachführung und einer passiven Säurenachführung unterschieden.

Bei einer aktiven Nachführung von Säure wird über die Pumpe 12 Säure aus dem Vorratsbehälter 11 über den Leitungsabschnitt 10 in den Verteilerkanal und von diesem in das Reservoir 7 gepumpt.

Dies erfolgt so lang, bis das Reservoir 7 vollständig mit Säure gefüllt ist. Anschließend strömt die Säure aus dem Reservoir 7 in den Zuführkanal 6. Das hat den Vorteil, dass eine gleichmäßige Phosphorsäureverteilung unabhängig von der Lage der einzelnen Zellen stattfindet, da erst die Reservoire 7 mit jeweils gleichem Volumen in den Versorgungsplatten vollständig befüllt werden und nach deren Befüllung der größte Teil der Säurezuführung in die Membran erfolgt.

Aus dem Zuführkanal 6 oder dem Zuführsäurereservoir strömt die Säure dann langsam und insbesondere hauptsächlich nur in dem Bereich, in dem das Gasdiffusionssubstrat mit dem Zuführkanal kontaktiert, über das Gasdiffusionssubstrat auch örtlich begrenzt in die Gasdiffusionselektrode und von dort in die elektrolythaltige Polymermembran 13, um dort den verbrauchten Elektrolyt (Phosphorsäure, Schwefelsäure) zu ersetzen. Von der elektrolythaltigen Polymermembran 13 und/oder der Elektrodenschicht wird die Säure dann flächig über die aktive Fläche der Zelle verteilt und zum Teil an die gegenüberliegende Elektrodenschicht abgegeben.

Alle Reservoirs 7 in den Versorgungsplatten 2 weisen das gleiche Volumen auf. Ein Sonderfall liegt vor, wenn einzelne Zellen unterschiedliche Betriebstemperaturen aufweisen. Dann können auch Reservoirs unterschiedlicher Volumina vorgesehen sein, um den unterschiedlichen Säureverbrauch kompensieren zu können. Die Reservoirs 7 dienen einer Vergleichmäßigung der Zuführung an Säure zu jeder einzelnen Zelle des Brennstoffzellenstapels. Auf diese Weise erhält jede Membranelektrodeneinheit (MEA), bestehend aus der elektrolythaltigen Polymermembran und den Gasdiffusionselektroden mit Katalysator, welcher auf das Gasdiffusionssubstrat aufgebracht ist, die gleiche Menge an Säure.

Bei einer passiven Zuführung von Säure kann auf die Zuführeinrichtung 12 verzichtet werden.

Bei einer derartigen Zuführung ist vorgesehen, dass Säure aus dem Vorratsbehälter von außerhalb des Brennstoffzellenstapels, zum Beispiel durch eine Volumenzunahme der Säure durch Wasserabsorption aus der Zelle, automatisch in den Brennstoffzellenstapel nachgeführt wird. Auf diese Weise ist eine kontinuierliche Zuführung möglich.

Gemäß einer derartigen Ausführungsform kann das Reservoir 7 auch als Vorratsbehälter 11 dienen, wodurch auf den Vorratsbehälter und weitere externe Einrichtungen gänzlich verzichtet werden könnte.

Gemäß einer nicht erfindungsgemäßen Ausführungsform kann auch auf den Verteilerkanal 9 sowie auf den Zuführkanal 6 verzichtet werden. Die Säure gelangt dann direkt aus dem als Vorratsbehälter ausgebildeten Reservoir 7 über die Gasdiffusionsschicht bzw. das Gasdiffusionssubstrat in die Elektrodenschicht und von dort aus in die elektrolythaltige Polymermembran, um den aus der Brennstoffzelle ausgetragenen Elektrolyten zu ersetzen.

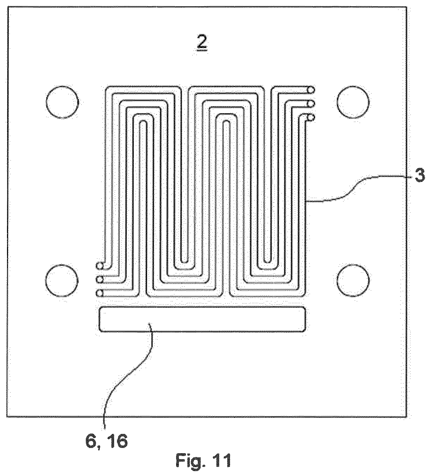

Demgemäß ist das Reservoir 7 als autarker begrenzter Raum in der Versorgungsplatte 2 und/oder im Dichtrahmen 20 ausgebildet (Figur 11). Bei einer Ausbildung im Dichtrahmen kann ein derartiges Säurereservoir auch als abgeschlossener Verteilerkanalabschnitt 5 angesehen werden. Eine derartige Ausführungsform mit autarkem Reservoir 7 stellt einen eigenständigen Erfindungsgedanken dar.

Die Säure kann erfindungsgemäß somit entweder aktiv an die Gasdiffusionselektrode gepumpt oder passiv durch Schwerkraft, aufgrund von Volumenvergrößerung, durch Adhäsionskräfte, oder Kapillarkräfte, oder durch Volumenvergrößerung aufgrund von Wasseraufnahme der Säurelösung aufgrund ihrer hygroskopischen Eigenschaften transportiert werden. Die Wasseraufnahme aus dem Produktwasser der Brennstoffzelle geht einher mit einer Volumenvergrößerung, welche eine Einbringung durch Eindrücken begünstigt.

Erfindungsgemäß ist vorgesehen, dass die Säure aus einem Säurereservoir bzw. einem in der Versorgungsplatte ausgebildeten, mit Säure gefüllten Raum durch das hydrophobe Gasdiffusionssubstrat bzw. durch die Gasdiffusionsschicht in die Elektrodenschicht gelangt und von dort aufgrund der hohen Säureaffinität bzw. Philie der Membran in die Elektrolytmembran eintritt.

Die Affinität des Elektrolyten beruht nicht nur auf dessen Saugfähigkeit und dem dort vorhandenen Wasser, sondern auch auf den basischen Gruppen des Elektrolyten, welche zum Beispiel Wasserstoffionen aufnehmen und mittels der dadurch entstehenden positiven Ladung das Säureanion anziehen. Somit entleert sich der Kanal und kann kontinuierlich oder diskontinuierlich wieder befüllt werden.

Um die Viskosität oder die Oberflächenspannung der Säure zu verringern oder die Oberfläche der Gasdiffusionselektrode aufnahmefähiger zu gestalten, können Additive, wie zum Beispiel Alkohole oder die Verwendung von verdünnter Säure vorgesehen sein. Damit wird ein Eindringen der Säure in die poröse Struktur der Gasdiffusionselektrode erleichtert. Da bei Kontakt von konzentrierter Säure mit der PBI-Membran eine Quellung der Polymermembran aufgrund örtlich zu hoher Säureaufnahme in der Polymermatrix erfolgen kann und dies zu ungleichmäßiger Stromdichteverteilung im Brennstoffzellenbetrieb sowie zu Membranschäden führen kann, kann eine Verdünnung der Säure mit einem hochsiedenden Lösungsmittel (z.B. Ethylenglycol) vorgesehen sein.

Gemäß einer weiteren Ausführungsform kann die Säure auch direkt der Polymermembran zugeführt werden. Hierbei ist dann vorgesehen, dass die Säure aus einem Reservoir über ein Zuführelement, wie z.B. einem an der Membran ausgebildeten bzw. einstückig angeformten Randabschnitt 21, einen Membranstreifen bzw. über eine Lasche oder ein separates Bauteil, wie z.B. einen Membranabschnitt oder einen Docht, in die Membran eintritt. Zur Kontaktierung der Säure mit der Membran sind die verschiedensten Ausbildungen möglich. Diese werden im Folgenden kurz erläutert.

Um eine bessere oder schnellere Verteilung der Säure direkt auf der Membran zu ermöglichen, kann als Transporthilfe für Säure auch ein Docht oder ein flächig angeordnetes Netz oder Fasern, mit geeigneter Ausrichtung zwischen Elektrode und Membran, positioniert sein. Die Fasern sind derart beschaffen, dass sie Säure leiten und wenn möglich derart viel Säure aufnehmen, dass sie die Protonenleitung der Kombination aus Elektrolytmembran und Transporthilfe nicht hemmen. Diese Transporthilfen können auch derart ausgebildet sein, dass Sie mit de Säurereservoir oder dem Reservoir kontaktieren.

Es kann auch eine Zuleitung zum Bereich der Polymermembran vorgesehen sein, wobei die Zuleitung zum Beispiel in einer Versorgungsplatte ausgebildet ist und die Säure über Löcher in der Gasdiffusionselektrode direkt zur Membran gelangt.

Des Weiteren kann die Zuleitung der Säure zum Bereich der Polymermembran über am Rand der Zellfläche befindliche und mit der Membran in Kontakt stehende oder auf der Membran liegende Polymerfolien ("Subgasket") durch den Hohlraum zwischen zwei oder mehreren Polymerfolien oder zwischen Polymerfolie und Membran erfolgen, wobei Kapillarkräfte ausgenutzt werden.

Um einen Abfluss der Säure zum Beispiel aus einem Zuführkanal durch die Gasdiffusionsschicht in angrenzende Versorgungskanäle zu vermeiden, kann ein vollständiges oder teilweises Abdichten bzw. Verpressen von Teilen der Gasdiffusionsschicht vorgesehen werden. Die Gasdiffusionsschicht kann beispielsweise durch Verkleben der Hohlräume mit einem vernetzenden Polymer oder durch Füllen mit PTFE-Partikeln abgedichtet werden. Durch einen Steg in der Versorgungsplatte oder eine Polymerdichtung kann gezielt örtlich zusätzlicher Druck auf die Gasdiffusionsschicht aufgebracht werden, welcher die Gasdiffusionsschicht verdichtet und die Porosität in diesem Bereich verringert.

Eine Positionierung des Zuführungskanals im unteren Bereichen der Versorgungsplatte ist vorteilhaft, um den Abfluss der Säure durch Schwerkraft aus dem Zuführungskanal in darunterliegende Versorgungskanäle zu vermeiden.

Der Abfluss von Säure zum Beispiel aus dem Zuführkanal in angrenzende Versorgungskanäle kann jedoch auch für eine großflächigere Verteilung der Säure über die Elektrodenfläche ausgenutzt werden. Hierbei findet unter anderem ein Übergang von Säure aus den Versorgungskanälen in die Gasdiffusionselektrode bzw. in die Polymermembran statt.

Eine Phosphorsäurezuführung kann sowohl während der Versorgung der Brennstoffzelle mit Reaktanden als auch ohne Versorgung, sowohl bei Stromfluss als auch ohne Stromfluss und sowohl mit als auch ohne Temperierung stattfinden.

Anstatt Phosphorsäure kann auch ein anderer Elektrolyt, wie beispielsweise Schwefelsäure oder ein elektrolythaltiges Gemisch (z.B. Phosphorsäure mit Ethylenglycol und ionischen Flüssigkeiten), verwendet werden und als Polymermembran kann eine geeignete HT-PEM Membran, wie zum Beispiel vernetztes AB-PBI, para-PBI oder ein aromatischer Polyether, verwendet werden. In dem Elektrolyt können auch Additive (z.B. Salze, Tenside, PBI) enthalten sein.

### Bezuqszeichenliste

- 1: Vorrichtung
- 2: Versorgungsplatte
- 3: Kanalstruktur
- 4: Verteilerkanalabschnitt
- 5: Verbindungskanal
- 6: Zuführkanal
- 7: Reservoir
- 8: Brennstoffzelle/Brennstoffzellenstapel
- 9: Verteilerkanal
- 10: Leitungsabschnitt
- 11: Vorratsbehälter
- 12: Zuführeinrichtung
- 13: elektrolythaltige Polymermembran
- 14: Lasche
- 15: Endabschnitt
- 16: Säurereservoir
- 17: Gasdiffusionselektrode
- 18: Versorgungssystem
- 19: Polymerfolie
- 20: Dichtrahmen
- 21: Randabschnitt
- 22: Ausnehmungen
- 23: Steg
- 24: Docht
- 25: Ausnehmung
- 26: Kapillare

## Patentansprüche

1. Vorrichtung zur Lebensdauerverlängerung einer HT-PEM Brennstoffzelle mit einem HT-PEM-Brennstoffzellenstapel, wobei eine Zelle des Stapels gemäß der folgenden Reihenfolge aufgebaut ist,
eine Versorgungsplatte mit Anodenkanalstruktur,
eine Anoden-Gasdiffusionselektrode,
eine elektrolythaltige Polymermembran,
eine Kathoden-Gasdiffusionselektrode,
eine Versorgungsplatte mit Kathodenkanalstruktur,
**dadurch gekennzeichnet,**
**dass** zumindest ein mit Säure gefülltes Säurereservoir vorgesehen ist, das mit einem, in den Versorgungsplatten sich senkrecht zu den Kanalstrukturen erstreckenden Verteilerkanal verbunden ist, wobei der Verteilerkanal mit zumindest einer der Gasdiffusionselektroden und/oder der Polymermembran zumindest einer der Zellen des Brennstoffzellenstapels derart in Verbindung steht, so dass zumindest einer der Gasdiffusionselektroden und/oder der Polymermembran zumindest einer der Zellen des Brennstoffzellenstapels Säure zuführbar ist.

2. Vorrichtung nach Anspruch 1,
**dadurch gekennzeichnet,**
**dass** im Säurereservoir Phosphorsäure, Schwefelsäure oder ein anderer Elektrolyt bzw. elektrolythaltiges Gemisch angeordnet ist.

3. Vorrichtung nach Anspruch 1 oder 2,
**dadurch gekennzeichnet,**
**dass** der Verteilerkanal mit zumindest einer der Gasdiffusionselektroden und/oder der Polymermembran zumindest einer der Zellen des Brennstoffzellenstapels über ein Verbindungsmittel, wie Kapillaren, einen Zuführkanal, ein Zuführelement eine Transporthilfe ein Reservoir oder eine kanalartige Struktur in Verbindung steht.

4. Vorrichtung nach einem der Ansprüche 1 bis 3,
**dadurch gekennzeichnet,**
**dass** vom Verteilerkanal ein in der Ebene der Kanalstruktur ausgebildeter Verbindungskanal abzweigt, der mit einem, in derselben Ebene liegenden, Zuführkanal verbunden ist, wobei dieser Zuführkanal ein Zuführsäurereservoir ausbildet ist, wobei über diese Kanäle der Brennstoffzelle Säure zuführbar ist.

5. Vorrichtung nach Anspruch 4,
**dadurch gekennzeichnet,**
**dass** in den Verbindungskanal und/oder den Zuführkanal ein Reservoir integriert ist.

6. Vorrichtung nach einem der Ansprüche 1 bis 5,
**dadurch gekennzeichnet,**
**dass** der Verteilerkanal aus Verteilerkanalabschnitten einer jeden Zelle ausgebildet ist, wobei der Verteilerkanal mit dem Säurereservoir verbunden ist.

7. Vorrichtung nach einem der Ansprüche 1 bis 6,
**dadurch gekennzeichnet,**
**dass** eine Zuführeinrichtung zum Zuführen von Säure aus einem externen Vorratsbehälter, der das Säurereservoir ist, in den Verteilerkanal vorgesehen ist.

8. Vorrichtung nach einem der Ansprüche 1 bis 7,
**dadurch gekennzeichnet,**
**dass** im Brennstoffzellenstapel Verteilerkanalabschnitte zum Zuführen und zum Abführen von Säure derart ausgebildet sind, dass Säure durch die Brennstoffzelle mittels einer Zirkuliereinrichtung zirkulierbar ist.

9. Vorrichtung nach Anspruch 7 oder 8,
**dadurch gekennzeichnet,**
**dass** die Zuführeinrichtung und/oder die Zirkuliereinrichtung von einer Steuereinrichtung derart ansteuerbar ist, dass eine gesteuerte Zuführung von Säure in die Zellen des Brennstoffzellstapels erfolgt.

10. Vorrichtung nach einem der Ansprüche 3 bis 9,
**dadurch gekennzeichnet,**
**dass** das Zuführelement mit dem Säurereservoir und der elektrolythaltigen Polymermembran und/oder der Gasdiffusionselektrode derart in Verbindung steht, dass Säure aus dem Säurereservoir der Polymermembran und/oder der Gasdiffusionselektrode zuführbar ist, wobei das Zuführelement zwischen Polymermembran und Gasdiffusionselektrode oder auch in einem an eine der beiden angrenzenden Bereich angeordnet ist.

11. Vorrichtung nach Anspruch 10,
**dadurch gekennzeichnet,**
**dass** das Zuführelement als ein Docht oder ein Netz oder aus Fasern, als Kapillare zwischen Polymerfolie(n) und/oder Membran oder als ein saugfähiger Körper, mit einem hohen Diffusionswiderstand und/oder einer geeigneten Porosität ist, so dass die Säure vom Körper langsam abgebbar ist, ausgebildet ist.

12. Vorrichtung nach einem der Ansprüche 3 bis 11,
**dadurch gekennzeichnet,**
**dass** das Zuführelement im Zuführsäurereservoir und/oder im Zuführkanal angeordnet ist.

13. Vorrichtung nach Anspruch 1,
**dadurch gekennzeichnet,**
**dass** das der Verteilerkanalabschnitt als autarker begrenzter Raum in der Versorgungsplatte ausgebildet ist und ein Säurereservoir definiert.

14. Verfahren zur Lebensdauerverlängerung von Hochtemperatur-Polymerelektrolytmembran-Brennstoffzellen, wobei eine Zelle des Stapels gemäß der folgenden Reihenfolge aufgebaut ist,
eine Versorgungsplatte mit Anodenkanalstruktur,
eine Anoden-Gasdiffusionselektrode,
eine elektrolythaltige Polymermembran,
eine Kathoden-Gasdiffusionselektrode,
eine Versorgungsplatte mit Kathodenkanalstruktur,
wobei Säure aus zumindest einem mit Säure gefüllten Säurereservoir über einen sich in den Versorgungsplatten senkrecht zu den Kanalstrukturen erstreckenden Verteilerkanal einer der Gasdiffusionselektroden und/oder der Polymermembran zumindest einer der Zellen des Brennstoffzellenstapels Säure zugeführt wird.

15. Verfahren nach Anspruch 14,
**dadurch gekennzeichnet,**
**dass** die Zuführung derart erfolgt, dass die Säure in die Elektrodenschicht einer Gasdiffusionselektrode und von dort in die Polymer-Matrix der Polymermembran eintritt und die Säure über die Elektrodenschicht und/oder über die Membran bzw. deren Grenzschicht flächig verteilt und ein Teil davon an die gegenüberliegende GDE abgegeben wird und/oder dass die Zuführung mittels Schwerkraft derart erfolgt, dass die Säure langsam zugeführt wird, wobei ein Eintritt von Säure in die Versorgungskanäle dadurch verhindert wird, dass das Reservoir unterhalb oder in Höhe des Zuführkanales angeordnet ist und somit die auf die Säure wirkende Kraft geringer ist und der Säurefluss langsamer ist.

## Claims

1. A device for increasing the service life of an HT-PEM fuel cell having an HT-PEM fuel cell stack, a cell of the stack being constructed in the following order:
a supply plate having an anode channel structure,
an anode gas diffusion electrode,
a polymer membrane containing an electrolyte,
a cathode gas diffusion electrode,
a supply plate having a cathode channel structure,
**characterized in that**
at least one acid reservoir filled with acid is provided, which is connected to a distributor channel extending in the supply plates perpendicular to the channel structures, the distributor channel being connected to at least one of the gas diffusion electrodes and/or to the polymer membrane of at least one of the cells of the fuel cell stack in such a manner that acid can be supplied to at least one of the gas diffusion electrodes and/or to the polymer membrane of at least one of the cells of the fuel cell stack.

2. The device according to claim 1,
**characterized in that**
phosphoric acid, sulfuric acid or another electrolyte or mixture containing an electrolyte is provided in the acid reservoir.

3. The device according to claim 1 or 2,
**characterized in that**
the distributor channel is connected to at least one of the gas diffusion electrodes and/or to the polymer membrane of at least one of the cells of the fuel cell stack via a connection means such as capillaries, a supply channel, a supply element, a transport aid, a reservoir or a channel-like structure.

4. The device according to any of the claims 1 to 3,
**characterized in that**
a connecting channel formed in the plane of the channel structure branches off from the distributor channel, which is connected to a supply channel situated in the same plane, said supply channel forming a supply acid reservoir, acid being able to be supplied to the fuel cell via these channels.

5. The device according to claim 4,
**characterized in that**
a reservoir is integrated in the connecting channel and/or the supply channel.

6. The device according to any of the claims 1 to 5,
**characterized in that**
the distributor channel is formed from distributor channel portions of each cell, the distributor channel being connected to the acid reservoir.

7. The device according to any of the claims 1 to 6,
**characterized in that**
a supply equipment for supplying acid from an external storage container, which is the acid reservoir, is provided in the distributor channel.

8. The device according to any of the claims 1 to 7,
**characterized in that**
distributor channel portions for supplying and discharging acid are formed in the fuel cell stack in such a manner that acid can be circulated through the fuel cell by means of a circulation equipment.

9. The device according to claim 7 or 8,
**characterized in that**
the supply equipment and/or the circulation equipment can be driven by a control equipment in such a manner that a controlled supply of acid to the cells of the fuel cell stack is performed.

10. The device according to any of the claims 3 to 9,
**characterized in that**
the supply element is connected to the acid reservoir and the polymer membrane containing an electrolyte and/or the gas diffusion electrode in such a manner that acid from the acid reservoir can be supplied to the polymer membrane and/or the gas diffusion electrode, the supply element being arranged between the polymer membrane and the gas diffusion electrode or also in a zone adjoining one of these.

11. The device according to claim 10,
**characterized in that**
the supply element is formed as a wick or as a net or as fibers, as capillaries between one or more polymer sheets and/or as a membrane or as an absorbent body, with a high resistance to diffusion and/or a suitable porosity so that acid can be delivered slowly from the body.

12. The device according to any of the claims 3 to 11,
**characterized in that**
the supply element is arranged in the supply acid reservoir and/or the supply channel.

13. The device according to claim 1,
**characterized in that**
the distributor channel portion is formed as a self-contained limited space in the supply plate and defines an acid reservoir.

14. A method for increasing the service life of high temperature polymer electrolyte membrane fuel cells, one cell of the stack being constructed in the following order:
a supply plate having an anode channel structure,
an anode gas diffusion electrode,
a polymer membrane containing an electrolyte,
a cathode gas diffusion electrode,
a supply plate having a cathode channel structure,
acid being supplied from at least one acid reservoir filled with acid to one of the gas diffusion electrodes and/or to the polymer membrane of at least one of the cells of the fuel cell stack via a distributor channel extending in the supply plates perpendicular to the channel structures.

15. The method according to claim 14,
**characterized in that**
the supply process is performed in such a manner that the acid enters the electrode layer of a gas diffusion electrode and from there into the polymer matrix of the polymer membrane, and the acid is distributed extensively over the electrode layer and/or the membrane or its boundary layer and a part of it is delivered to the opposite gas diffusion electrode and/or the supply process is performed by means of gravity in such a manner that the acid is supplied slowly, an entry of acid into the supply channels being prevented by the fact that the reservoir is arranged below or at the level of the supply channel and hence the force acting on the acid is less and the acid flow is slower.

## Revendications

1. Dispositif destiné à prolonger la durée de vie d'une pile à combustible HT-PEM avec un empilement de piles à combustible HT-PEM, sachant qu'une pile de l'empilement est montée selon l'ordre suivant:
une plaque d'alimentation comprenant une structure de canal anodique,
une électrode de diffusion de gaz anodique,
une membrane polymère contenant un électrolyte,
une électrode de diffusion de gaz cathodique,
une plaque d'alimentation comprenant une structure de canal cathodique,
**caractérisé en ce que**
au moins un réservoir d'acide rempli d'acide, qui est relié à un canal distributeur s'étendant dans les plaques d'alimentation perpendiculairement aux structures de canal, est prévu, le canal distributeur étant en liaison avec au moins une des électrodes de diffusion de gaz et/ou la membrane polymère d'au moins une des piles de l'empilement de piles à combustible de telle manière que de l'acide puisse être amené à au moins une des électrodes de diffusion de gaz et/ou à la membrane polymère d'au moins une des piles de l'empilement de piles à combustible.

2. Dispositif selon la revendication 1,
**caractérisé en ce que**
de l'acide phosphorique, de l'acide sulfurique ou un autre électrolyte ou mélange contenant un électrolyte est disposé dans le réservoir d'acide.

3. Dispositif selon la revendication 1 ou 2,
**caractérisé en ce que**
le canal distributeur est en liaison avec au moins une des électrodes de diffusion de gaz et/ou la membrane polymère d'au moins une des piles de l'empilement de piles à combustible via un moyen de liaison, comme des capillaires, un canal d'amenée, un élément d'amenée, un aide au transport, un réservoir ou une structure de type canal.

4. Dispositif selon l'une des revendications 1 à 3,
**caractérisé en ce que**
un canal de liaison constitué dans le plan de la structure de canal, qui est relié à un canal d'amenée situé dans le même plan, dérive du canal de distributeur, ce canal d'amenée constituant un réservoir d'acide d'amenée, l'acide pouvant être amené à la pile à combustible par ces canaux.

5. Dispositif selon la revendication 4,
**caractérisé en ce que**
un réservoir est intégré dans le canal de liaison et/ou le canal d'amenée.

6. Dispositif selon l'une des revendications 1 à 5,
**caractérisé en ce que**
le canal distributeur est constitué à partir de sections de canal distributeur de chaque pile, le canal distributeur étant relié au réservoir d'acide.

7. Dispositif selon l'une des revendications 1 à 6,
**caractérisé en ce que**
un dispositif d'amenée pour l'amenée d'acide depuis un récipient de stockage externe, qui est le réservoir d'acide, est prévu dans le canal distributeur.

8. Dispositif selon l'une des revendications 1 à 7,
**caractérisé en ce que**
des sections de canal distributeur pour l'amenée et pour l'évacuation d'acide sont constituées dans l'empilement de piles à combustible de telle manière que de l'acide puisse être mis en circulation à travers la pile à combustible moyennant un dispositif de circulation.

9. Dispositif selon la revendication 7 ou 8,
**caractérisé en ce que**
le dispositif d'amenée et/ou le dispositif de circulation est pilotable par un dispositif de commande de telle manière qu'une amenée commandée d'acide aux piles de l'empilement de piles à combustible ait lieu.

10. Dispositif selon l'une des revendications 3 à 9,
**caractérisé en ce que**
l'élément d'amenée est en liaison avec le réservoir d'acide et la membrane polymère contenant un électrolyte et/ou l'électrode de diffusion de gaz de telle manière que de l'acide puisse être amené à la membrane polymère et/ou à l'électrode de diffusion de gaz depuis le réservoir d'acide, l'élément d'amenée étant disposé entre la membrane polymère et l'électrode de diffusion de gaz ou aussi dans une zone adjacente à l'une des deux.

11. Dispositif selon la revendication 10,
**caractérisé en ce que**
l'élément d'amenée est constitué comme mèche ou comme filet ou en fibres, comme capillaires entre une ou des feuilles polymères et/ou membrane ou comme corps absorbant, avec une résistance élevée à la diffusion et/ou une porosité appropriée de sorte que l'acide puisse être délivré lentement par le corps.

12. Dispositif selon l'une des revendications 3 à 11,
**caractérisé en ce que**
l'élément d'amenée est disposé dans le réservoir d'acide d'amenée et/ou dans le canal d'amenée.

13. Dispositif selon la revendication 1,
**caractérisé en ce que**
la section de canal distributeur est constituée comme espace limité autarcique dans la plaque d'alimentation et définit un réservoir d'acide.

14. Procédé destiné à prolonger la durée de vie de piles à combustible à membrane d'électrolyte polymère à haute température, sachant qu'une pile de l'empilement est montée selon l'ordre suivant:
une plaque d'alimentation comprenant une structure de canal anodique,
une électrode de diffusion de gaz anodique,
une membrane polymère contenant un électrolyte,
une électrode de diffusion de gaz cathodique,
une plaque d'alimentation comprenant une structure de canal cathodique,
sachant que de l'acide est amené depuis au moins un réservoir d'acide rempli d'acide à une des électrodes de diffusion de gaz et/ou à la membrane polymère d'au moins une des piles de l'empilement de piles à combustible via un canal distributeur s'étendant dans les plaques d'alimentation perpendiculairement aux structures de canal.

15. Procédé selon la revendication 14,
**caractérisé en ce que**
l'amenée a lieu de telle manière que l'acide entre dans la couche d'électrode d'une électrode de diffusion de gaz et de là dans la matrice polymère de la membrane polymère et l'acide est réparti à grande surface sur la couche d'électrode et/ou sur la membrane ou sa couche limitrophe et une partie de celui-ci est délivrée à l'électrode de diffusion de gaz opposée et/ou **en ce que** l'amenée a lieu par gravité de telle manière que l'acide soit amené lentement, sachant qu'une entrée d'acide dans les canaux d'alimentation est empêchée par le fait que le réservoir est disposé sous ou à hauteur du canal d'amenée et dès lors la force agissant sur l'acide est moindre et le flux d'acide est plus lent.
